# EUROPEAN PATENT APPLICATION

(11) **EP 1 248 461 A2**
(43) Date of publication of application: **09.10.2002**
(21) Application number: 02007747.5
(22) Date of filing: 05.04.2002
(51) Int. Cl.: H04N 7/16, H04N 7/173, H04H 9/00

(54) **Data broadcasting schedule system and apparatus, method, recoding medium, or program thereabout**

(30) Priority: 06.04.2001 JP 2001109202
(71) Applicant: MATSUSHITA ELECTRIC INDUSTRIAL CO., LTD., Kadoma-shi, Osaka (JP)
(72) Inventor: Nabeshima, Shinji, Suita-shi, Osaka (JP); Arai, Yuko, Tokyo (JP); Shinohara, Hiroki, Yokohama-shi, Kanagawa (JP)
(74) Representative: Grünecker, Kinkeldey, Stockmair & Schwanhäusser Anwaltssozietät

(57) **Abstract**

In a data broadcasting schedule system transmitting and receiving data over a transmission line, contents can be transmitted from plural channels and broadcasting stations under store and forward broadcast service, and a receiving machine can efficiently receive and store transmitted contents. To achieve this, a data transmitting part transmitting data to the receiving machine transmitting and receiving data comprises a transmit desire registration part that accepts registration of transmit desire information describing times required to transmit data to be transmitted for each broadcasting station and registers the transmit desire information, a transmit desire management part that manages said transmit desire information registered in the transmit desire registration part, and an adjusting part that arbitrates transmit time of data to be transmitted from said each broadcasting station without overlap by using each said transmit desire information managed by said transmit desire management part.

## Description

### BACKGROUND OF THE INVENTION

### 1. Field of the Invention

The present invention relates to technology for creating and managing data transmit schedules in a system transmitting data over broadcast, communication, or the like.

### 2. Description of the Prior Art

Conventionally, service providers and broadcasters have respectively broadcast contents independently over one channel. Users have reserved and recorded desired ones of contents transmitted over plural channels at users' will. When plural desired contents overlap in terms of time, the users have judged which contents are to be reserved.

In store and forward broadcast service, a receiving machine recognizes transmission line information and schedules of contents to be stored, and reserves and stores the contents without user operation.

In initial forms of store and forward broadcast service, contents were continuously broadcast over one channel of a broadcasting station dedicated to a service provider providing the service, and only required ones of the contents were reserved and stored. Therefore, an scheduling system only decided transmit schedules of contents from individual contents provides and the receiving machine had only to tune (or select) a same channel.

However, in conventional forms of store and forward broadcast service, the contents providers must transmit contents data from broadcasting stations dedicated to service providers. In contrast, in the case where broadcasting stations provide contents, broadcasting in transmission bands of the broadcasting stations would enable lower-cost provision of contents without charge for using the transmission lines. Also, the contents providers could provide contents at lower costs from other broadcasting stations having a free transmission band if any.

Thus, in store and forward broadcast service, there is a demand to transmit data contents not only from broadcasting stations dedicated to service provides but also from plural broadcasting stations.

Since the receiving machine has only one tuner for receiving and storing data contents, it can receive only data contents from one broadcasting station at the same time. Adding tuners leads to an increase in the costs of the receiving machine. Accordingly, to transmit data contents from plural broadcasting stations requires performing scheduling so that the individual data contents are transmitted without overlapping in terms of time.

On the other hand, a storage device provided in the receiving machine is expected to increase in storage capacity in future and accordingly the contents providers desire to transmit more data contents. However, since transmission bands are finite, there may occur an overlap in terms of time in transmission of individual data contents.

Transmission bands vary in usage charge, depending on time zones, and the contents providers desire to specify time zones to transmit. In this case, time zones in which the contents provider desire to transmit data contents may concentrate to specific ones and an overlap in terms of time may occur in each transmission.

Therefore, the present invention has been made in view of the above problems and an object of the present invention is to enable transmission of contents from plural channels and broadcasting stations in store and forward broadcast service and organize transmission lines and transmit schedules to transmit contents according to contents providers' transmit desires so that receiving machines can effectively receive and store transmitted contents.

### SUMMARY OF THE INVENTION

To solve the above described problems, a transmit scheduling apparatus of the present invention comprises: a transmit desire registration part that registers transmit desire information which is data for at least one contents provider to request transmission of data contents and contains at least broadcasting stations and channels to transmit from and the identification numbers of data contents to be transmitted and transmit time of the data contents; a transmit desire management part that holds the transmit desire information; an adjusting part that arbitrates and decides broadcasting stations to actually transmit data contents and schedules from the transmit desire information, and creates receive control information for identifying data contents to be received and stored by a receiving machine and for tuning a tuner required to receive said data contents, and program transmit information describing transmit schedules of the data contents; a receive control information management part that manages the receive control information; a program transmit information management part that manages the program transmit information; a receive control information transmitting part that transmits the receive control information to the receiving machine; and a program transmit information transmitting part that transmits the program transmit information to information transmitting apparatuses of broadcasting stations, whereby scheduling is performed among at least one broadcasting station to transmit data contents without overlapping in terms of time. The information transmitting apparatus of the present invention, comprising: a program transmit information receiving part that receives the program transmit information; a program transmit information management part that holds program transmit information received by the program transmit information receiving part; a program information creating part that creates program information to be received by the receiving machine from the program transmit information held by said program transmit information management part; a program information management part that manages the program information created by the program information creating part; a contents management part that manages data contents; and a transmitting part that transmits the program information and the data contents managed by the contents management part to the receiving machine, whereby, according to transmit schedules of the program information, data contents are transmitted from channels described in the program information. The receiving machine of the present invention is a receiving machine receiving and storing data contents transmitted by the information transmitting apparatus, the receiving machine comprising: a receive control information receiving part that receives the receive control information; a receive control information management part that holds the receive control information received by the receive control information receiving part; a reserving part that reserves data contents to be received and stored from the receive control information and the program information; a station tuning control part that tunes a tuner according to the receive control information and the program information corresponding to data contents reserved by the reserving part; and a data receiving part that receives the program information and data contents according to station tuning by the station tuning control part.

Therefore, according to the present invention, since contents can be transmitted without overlapping in terms of time from plural broadcasting stations and channels as desired by contents providers, the contents can be received in the receiving terminal without fail.

Even in the case where contents are transmitted with overlap in terms of time from plural broadcasting stations and channels because of an increased amount of content transmission, the receiving machine can appropriately judge and store which of the plural overlapping contents to receive.

Also, even in the case where contents are transmitted with overlap in terms of time from plural broadcasting stations and channels because contents providers specify transmit time zones, the receiving machine can appropriately judge and store which of the plural overlapping contents to receive.

Therefore, a first object of the present invention is to provide a data broadcasting schedule system that enables contents to be transmitted from plural channels and plural broadcasting stations as data broadcasting service.

A second object of the present invention is to provide a system that can transmit contents from plural channels and plural broadcasting stations as data broadcasting service and creates and manages data transmit schedules.

A third object of the present invention is to provide a data broadcasting schedule system that organizes transmission lines and transmit schedules for transmitting contents according to a transmit desire of contents providers engaging in data broadcasting service so that the receiving machine can effectively receive and store transmitted contents.

A fourth object of the present invention is to provide an apparatus, method, recording medium, or program that can be used in a data broadcasting schedule system as described above.

The above described objects and advantages of the present invention will be made more apparent from the following embodiment described with reference to the accompanying drawings.

### BRIEF DESCRIPTION OF THE DRAWINGS

FIG. 1 is a block diagram showing an overall configuration in a first embodiment of the present invention;
FIG. 2 is a block diagram showing a configuration of a transmit scheduling apparatus 100;
FIG. 3 is a schematic diagram showing an example of a transmit desire information 300;
FIG. 4 is a schematic diagram showing an example of a transmit time frame creation table 600;
FIG. 5 is a schematic diagram showing an example of a transmit schedule table 700;
FIG. 6 is a schematic diagram showing an example of a receive control information 400 ;
FIG. 7 is a schematic diagram showing an example of program transmit information 500;
FIG. 8 is a block diagram showing a configuration of an information transmitting apparatuses 2000;
FIG. 9 is a schematic diagram showing an example of program information 800;
FIG. 10 is a block diagram showing a configuration of a receiving machine 3000;
FIG. 11 is a schematic diagram showing an example of a reservation table 900;
FIG. 12 is a block diagram showing an overall configuration in a second embodiment;
FIG. 13 is a block diagram showing a configuration of a transmit scheduling apparatus 1200;
FIG. 14 is a schematic diagram showing an example of exclusionary program information 4000;
FIG. 15 is a flowchart of transmit schedule decision processing by an adjusting part 1203;
FIG. 16 is a schematic diagram showing a state in which all contents classification numbers of exclusionary program information have been written to a transmit schedule table 720.
FIG. 17 is a schematic diagram showing a state in which the transmit schedule table 720 is in the process of creation;
FIG. 18 is a schematic diagram showing a state in which the transmit schedule table 720 is in the process of creation;
FIG. 19 is a schematic diagram of the transmit schedule table 720 in which all data contents of the transmit desire information 300 are placed;
FIG. 20 is a schematic diagram showing an example of program information 820;
FIG. 21 is a block diagram showing an overall configuration in a third embodiment;
FIG. 22 is a block diagram showing a configuration of a transmit scheduling apparatus 1200;
FIG. 23 is a schematic diagram showing an example of transmit desire information 330;
FIG. 24 is a schematic diagram showing an example of transmit desire information 330;
FIG. 25 is a flowchart of transmit schedule decision processing by an adjusting part 1303;
FIG. 26 is a schematic diagram showing a state in which a transmit schedule table 730 is in the process of creation;
FIG. 27 is a schematic diagram showing a state in which the transmit schedule table 730 is in the process of creation;
FIG. 28 is a schematic diagram of a transmit schedule table 730 in which all data contents of the transmit desire information 330 are placed;
FIG. 29 is a schematic diagram showing an example of program information 830;
FIG. 30 is a block diagram showing a configuration of a receiving machine 3300;
FIG. 31 is a schematic diagram showing an example of a storage contents list 3350;
FIG. 32 is a schematic diagram showing an example of a reservation table 930;
FIG. 33 is a schematic diagram showing an example of a reservation table 930;
FIG. 34 is a block diagram showing an overall configuration in a fourth embodiment;
FIG. 35 is a block diagram showing a configuration of a transmit scheduling apparatus 1400;
FIG. 36 is a schematic diagram showing an example of transmit desire information 340;
FIG. 37 is a flowchart of transmit schedule decision processing by an adjusting part 1403;
FIG. 38 is a schematic diagram showing a state in which a transmit schedule table 740 is in the process of creation;
FIG. 39 is a schematic diagram showing an example of an overlap contents list 1450;
FIG. 40 is a schematic diagram showing an example of an overlap contents list 1450;
FIG. 41 is a schematic diagram showing an example of a transmit schedule table 740;
FIG. 42 is a schematic diagram showing an example of a transmit schedule table 740;
FIG. 43 is a block diagram showing an overall configuration in a fifth embodiment;
FIG. 44 is a block diagram showing a configuration of a transmit scheduling apparatus 1500;
FIG. 45 is a schematic diagram showing an example of transmit desire information 350;
FIG. 46 is a schematic diagram showing an example of transmit desire information 350;
FIG. 47 is a flowchart of transmit schedule decision processing by an adjusting part 1503;
FIG. 48 is a schematic diagram showing a state in which a transmit schedule table 750 is in the process of creation;
FIG. 49 is a schematic diagram showing an example of an attribute array table 1550;
FIG. 50 is a schematic diagram of a transmit schedule table 750 in which all data contents of the transmit desire information 350 are placed;
FIG. 51 is a schematic diagram showing an example of program information 850;

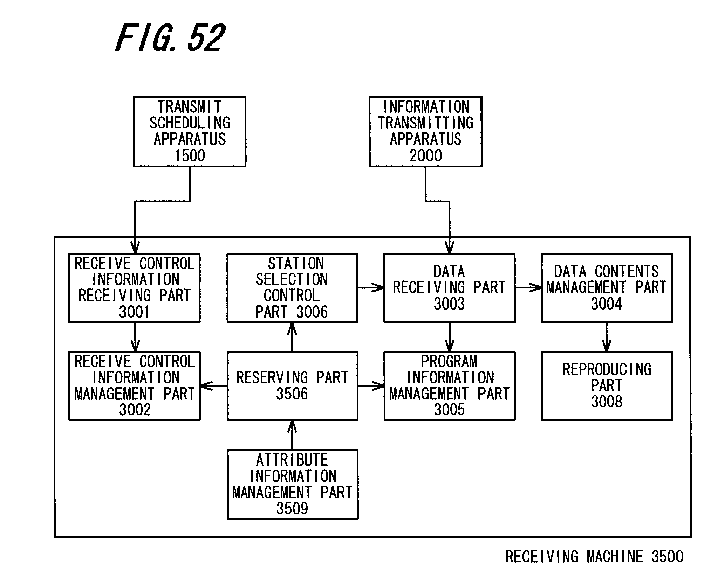

FIG. 52 is a block diagram showing a configuration of a receiving machine 3500;
FIG. 53 is a schematic diagram showing an example of a reservation table 950;
FIG. 54 is a schematic diagram showing an example of a reservation table 950;
FIG. 55 is a block diagram showing an overall configuration in a sixth embodiment;
FIG. 56 is a block diagram showing a configuration of a transmit scheduling apparatus 1600;
FIG. 57 is a schematic diagram showing an example of station priority information 1650;
FIG. 58 is a schematic diagram showing an example of transmit desire information 360;
FIG. 59 is a schematic diagram showing an example of transmit desire information 360;
FIG. 60 is a flowchart of transmit schedule decision processing by an adjusting part 1603;
FIG. 61 is a schematic diagram showing a state in which a transmit schedule table 760 is in the process of creation;
FIG. 62 is a schematic diagram of a transmit schedule table 750 in which all data contents of the transmit desire information 360 are placed;
FIG. 63 is a schematic diagram showing an example of receive control information 460;
FIG. 64 is a schematic diagram showing an example of program information 860;
FIG. 65 is a block diagram showing a configuration of a receiving machine 3600;
FIG. 66 is a schematic diagram showing an example of a reservation table 960;
FIG. 67 is a schematic diagram showing an example of a reservation table 960;

### DESCRIPTION OF THE PREFERRED EMBODIMENTS

In a configuration in which service providers providing store and forward broadcast service make contact with contents providers in the condition that contents of the contents providers are transmitted as data contents of the service to be stored in user receiving machines without fail, and broadcasting stations that desire to transmit data contents to be provided from the data contents providers transmit the data contents, embodiments of the present invention make it possible to make schedules to transmit the data contents from the broadcasting stations without overlapping in terms of time, or even in the event of overlap, enable both of overlapping data contents to be stored in user receiving machines. Hereinafter, the embodiments will be described.

### (First embodiment)

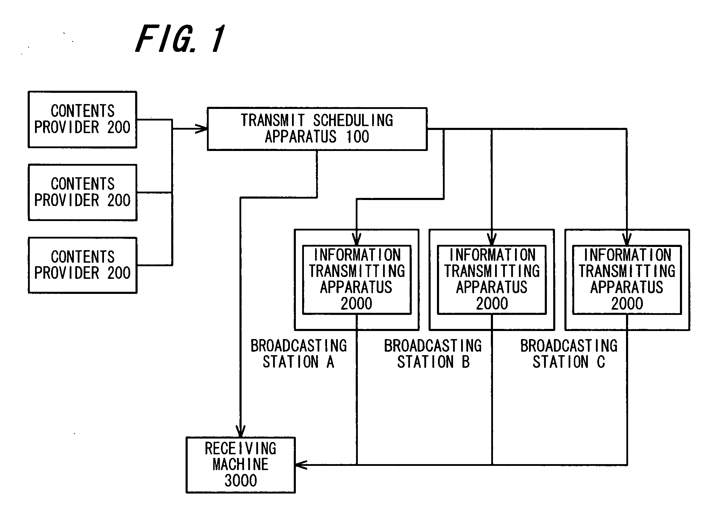

FIG. 1 is a block diagram showing an overall configuration in a first embodiment of the present invention. A first embodiment of the present invention comprises: a transmit scheduling apparatus 100 that organizes transmit schedules with broadcasting stations and channels to transmit data contents for store and forward broadcast service; information transmitting apparatuses 2000 that transmits data contents according to a transmit schedule organized by the transmit scheduling apparatus 100; and a receiving machine 3000 that receives and stores data contents transmitted from the information transmitting apparatuses 2000.

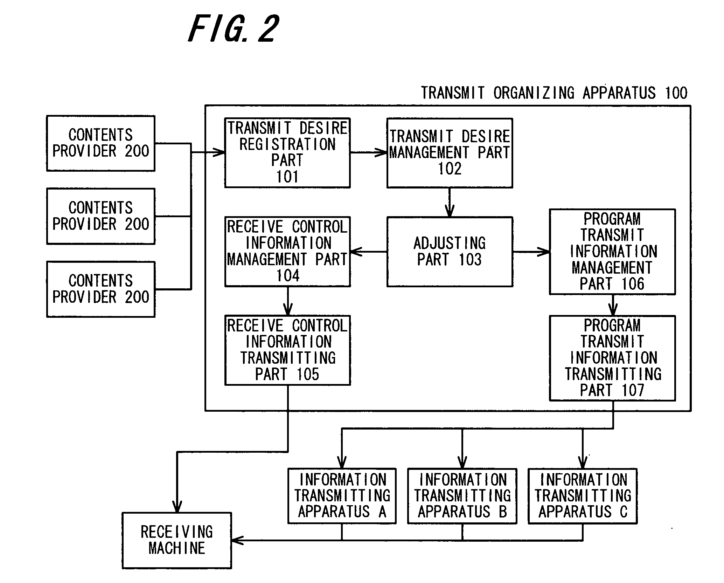

FIG. 2 is a block diagram showing a configuration of the transmit scheduling apparatus 100 in the first embodiment of the present invention.

The transmit scheduling apparatus 100 comprises: a transmit desire registration part 101; a transmit desire management part 102; an adjusting part 103; a receive control information management part 104; a receive control information transmitting part 105; a program transmit information management part 106; and a program transmit information transmitting part 107.

### (Detailed description of the transmit scheduling apparatus 100)

The transmit desire registration part 101 accepts the registration of transmit desire information indicating a data contents transmit mode desired by the contents providers 200 and outputs the registered transmit desire information 300 to the transmit desire management part 102.

### (Detailed description of transmit desire information 300)

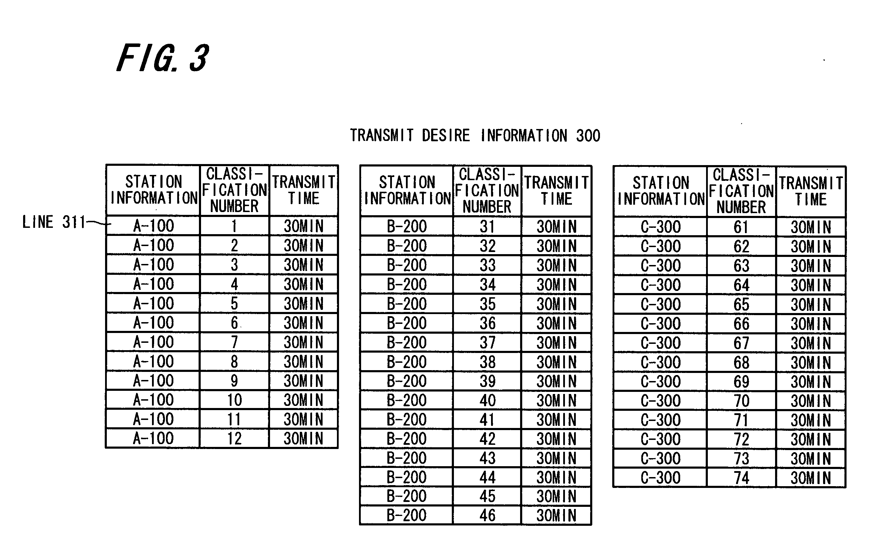

FIG. 3 is a schematic diagram showing an example of the transmit desire information 300. The transmit desire information 300, which has items of contents classification number, station information, and transmit time, provides desired information to the transmit scheduling apparatus 100 with respect to each item of data contents provided by the contents providers 200. A contents classification number is a number for identifying data contents desired to transmit by a contents provider 200. Station information indicates a broadcasting station and channel that desires to transmit data contents identified by a contents classification number. A transmit time is a time required to transmit particular data contents. Line 311 indicates a desire to transmit data contents having a contents classification number of 1 for 30 minutes from channel 100 of broadcasting station A. Hereinafter, combinations of broadcasting stations and channels such as a broadcasting station A and channel 100 will be represented as A-100, B-200, C-300, etc..

The transmit desire management part 102 holds transmit desire information 300 accepted by the transmit desire registration part 101. Although the transmit desire management part 102 is realized by a database or the like, the present invention places no special limitation upon the form of realizing it. The adjusting part 103 interprets the transmit desire information 300 held by the transmit desire management part 102 to create receive control information 400 and program transmit information 500. In the process of the creation, the adjusting part 103 creates a transmit time frame creation table 600 and a transmit schedule table 700. The receive control information management part 104 manages receive control information 400 created by the adjusting part 103. Although the receive control information management part 104 is realized by a database or the like, the present invention places no special limitation upon the form of realizing it.

The receive control information transmitting part 105 reads the receive control information 400 managed by the receive control information management part 104 and transmits it to the receiving machine 3000. The program transmit information management part 106 manages the program transmit information 500 created by the adjusting part 103. Although the program transmit information management part 106 is realized by a database or the like, the present invention places no special limitation upon the form of realizing it. The program transmit information transmitting part 107 reads the program transmit information 500 managed by the program transmit information management part 106 and transmits it to the information transmitting apparatuses 2000. The transmit desire registration part 101, the transmit desire management part 102, the adjusting part 103, the receive control information management part 104, the receive control information transmitting part 105, the program transmit information management part 106, and the program transmit information transmitting part 107 need not to be necessarily configured in same equipment; but they may be configured in different equipment, or integrated over a network.

### (Detailed description of transmit time frame creation table 600)

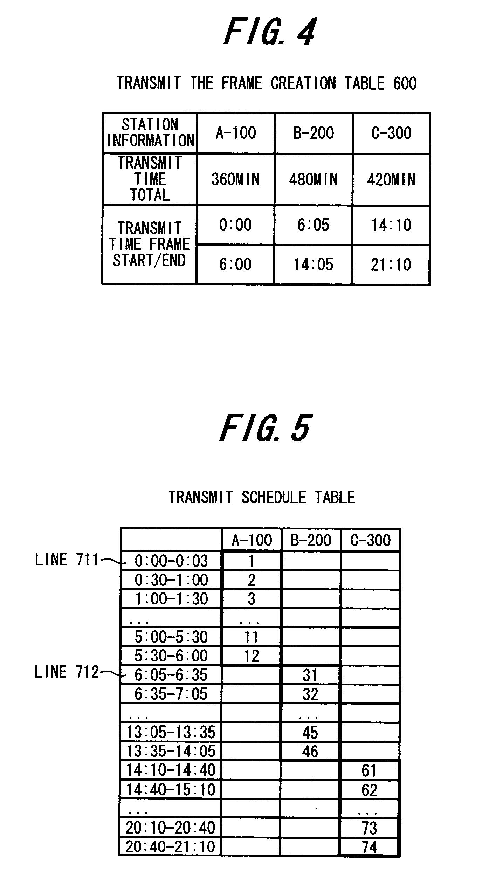

FIG. 4 is a schematic diagram showing an example of the transmit time frame creation table 600 created by the adjusting part 103. The transmit time frame creation table 600 has items of station information, transmit time total, and transmit time frame. The line of station information contains station information contained in the transmit desire information 300. The transmit time total is the sum of transmit time of data contents desired to transmit from individual channels. The line of transmit time frame contains data contents transmit time zones allocated to individual broadcasting stations from transmit time totals. In FIG. 4, in the case of channel 100 of broadcasting station A, a transmit time total of all data contents desired to transmit is 360 minutes, so that a transmit time frame for the channel 100 of the broadcasting station A to transmit data contents is from 0:00 to 6:00.

### (Detailed description of transmit schedule table 700)

FIG. 5 is a schematic diagram showing an example of a transmit schedule table 700 created by the adjusting part 103. The transmit schedule table 700 is a table for deciding transmit schedules of all data contents contained in the transmit desire information 300, based on a transmit contents table 600 created by the adjusting part 103. The transmit schedule table 700 has items of schedules and station information. A schedule is described with a time when data contents are transmitted. Station information is described with a broadcasting station and channel to transmit data contents. This example shows that transmission is performed over the respective channels 100, 200, and 300 of three broadcasting stations. Line 711 shows that data contents having a contents classification number of 1 are transmitted for 30 minutes from 0:00 in A-100. Line 712 shows that data contents having a contents classification number of 31 are transmitted for 30 minutes from 6:05 in B-200.

### (Detailed description of receive control information 400)

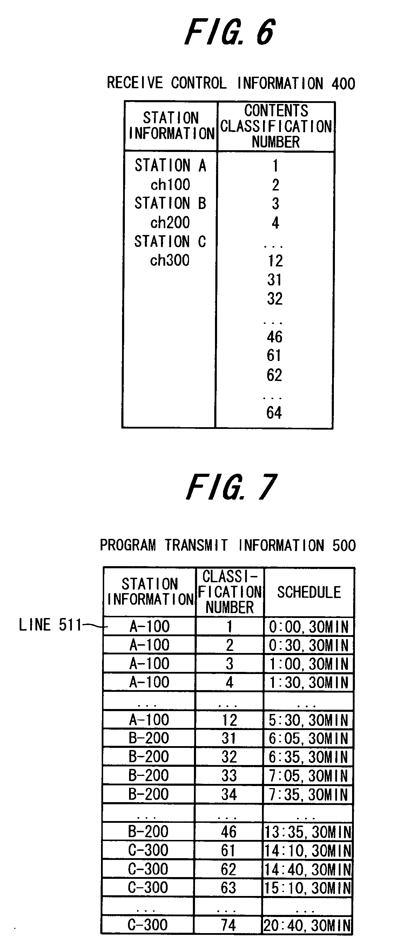

FIG. 6 is a schematic diagram showing an example of a receive control information 400 created by the adjusting part 103. The receive control information 400 consists of contents classification numbers for recognizing data contents to be received and stored by the receiving machine 3000, and information about stations from which the data contents are transmitted, namely, stations to be selected to receive the data contents. In this example, 1, 2, 3, ..., 12, 31, 32, ..., 46, 61, 62,..., 74 are described as contents classification numbers, and A-100, B-200, and C-300 are described as station information. This means that the receiving machine 3000 needs to receive and store data contents of contents classification numbers 1, 2, 3,..., 12, 31, 32,..., 46, 61, 62,..., 74, and to achieve this, the respective channels 100, 200, and 300 of broadcasting stations A, B, and C must be selected.

### (Detailed description of program transmit information 500)

FIG. 7 is a schematic diagram showing an example of program transmit information 500 created by the adjusting part 103. The program transmit information 500 is information for creating program information to be transmitted to the receiving machine 3000 from the information transmitting apparatuses 2000 of individual broadcasting stations. The program transmit information 500 consists of sets of station information, contents classification number, and transmit schedule. Line 511 of this example shows that data contents having a contents classification number of 1 are transmitted for 30 minutes from 0:00 in A-100.

### (Description of the creation of transmit time frame creation table 600 by the adjusting part 103)

The adjusting part 103 gets contents classification number, station information, and transmit time from each line of the transmit desire information 300; station information is newly created if it does not exist in the transmit time frame creation table 600. The adjusting part 103 adds contents transmit time got from the station information column of the transmit desire information 300 to the value of transmit time total of the contents transmit time total line of the transmit time frame creation table 600.

The adjusting part 103, for all data contents from all the transmit desire information 300, adds transmit time to the transmit time frame creation table 600. The adjusting part 103 allocates transmit time frames of individual stations from the transmit time totals so that they do not overlap each other. First, a transmit time frame of A-100 is 360 minutes and a transmit time frame from 0:00 to 6:00 is allocated to A-100. Next, a transmit time frame of B-200 is 480 minutes and a transmit time frame is allocated to B-200 to avoid an overlap with the transmit time frame of A-100. A start time of a transmit time frame of B-200 is preceded by an interval of 5 minutes provided after the end of the transmit time frame of A-100. Therefore, a transmit time frame of B-200 is set to 6:05 to 14:05. Next, since a transmit time frame of C-3000 is 420 minutes, similarly, an interval of 5 minutes is provided after the end of the transmit time frame of B-200 to set a transmit time frame of C-300 to 14:10 to 21:10. FIG. 4 shows the transmit time frame creation table 600 created in this way.

The adjusting part 103 creates the transmit schedule table 700 from the transmit time frame creation table 600 and the transmit desire information 300 which were created as described above. The receiving machine 3000 described later, to receive contents, performs time-consuming processing for tuning a tuner to a broadcasting station and channel from which the contents are transmitted. For example, when two contents from different broadcasting stations and channels are to be stored continuously in terms of time, selecting a station after completion of reception of preceding contents would fail in receiving the first portion of following contents. On the other hand, selecting a station before completion of reception of the preceding contents to receive the first portion of the following contents would fail in receiving the end of the preceding contents. Therefore, in order that the receiving machine 3000 receives all both contents, idle time must be provided at the end of transmit time of the both contents. Accordingly, the adjusting part 103, in the above described creation of transmit time frame, provides an idle time between one transmit time frame and the next. Although this embodiment provides an interval of 5 minutes every two contiguous transmit time frames, the interval is not limited to 5 minutes but may be any seconds or minutes if a sufficient time is provided to enable the above described processing.

### (Description of the creation of transmit schedule table 700 by the adjusting part 103)

The adjusting part 103 gets station information from the transmit time frame creation table 600 and writes it to station information of the transmit schedule table 700. The adjusting part 103 gets contents classification number, station information, and transmit time from each line of the transmit desire information 300. The adjusting part 103 gets a transmit time frame corresponding to got station information from the transmit time frame creation table 600, and writes a got contents classification number to the location of start time of the transmit time frame for the transmit schedule table 700. Thereafter, for data contents of the same station information, the contents classification numbers of the data contents are successively written to the location of time after a transmit time of contents written previously until the contents classification numbers of all data contents of the transmit desire information 300 are written to the transmit schedule table 700. FIG. 5 shows the transmit schedule table 700 at completion of writing the contents classification numbers of all data contents of the transmit desire information 300 of FIG. 3.

### (Description of the creation of the receive control information 400 by the adjusting part 103)

The adjusting part 103 gets contents classification number and station information from each line of the transmit desire information 300. The adjusting part 103, if the station information does not exist in the receive control information 400, newly adds it. The adjusting part 103 writes the got contents classification number to the receive control information 400. The adjusting part 103 gets all the transmit desire information 300 to create the receive control information 400. FIG. 6 shows an example of the receive control information 400 created by this processing. The receive control information 400 may be created in parallel with the creation of the transmit time frame creation table 600, the transmit schedule table 700, and the program transmit information 500.

### (Description of the creation of the program transmit information 500 by the adjusting part 103)

The adjusting part 103 gets station information from the transmit schedule table 700, gets transmit schedules corresponding to contents classification numbers from columns of the station information, and writes them to the program transmit information 500. FIG. 7 shows an example of the program transmit information 500 created by this processing. The program transmit information 500 may be created in parallel with the creation of the transmit schedule table 700.

### (Detailed description of the information transmitting apparatuses 2000)

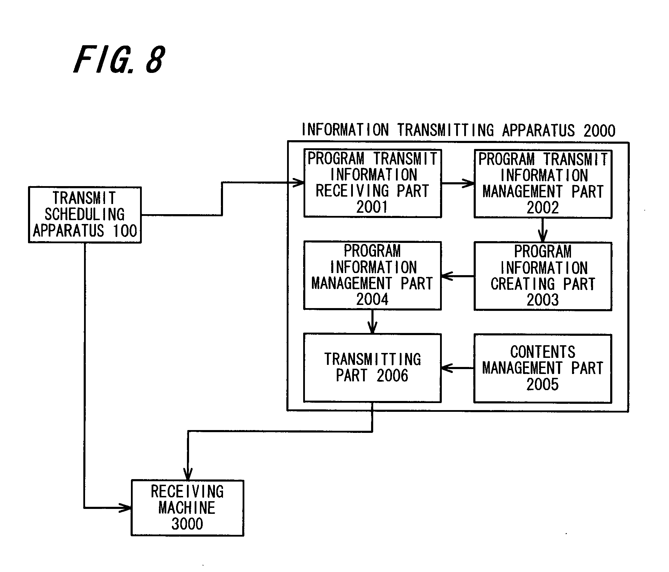

FIG. 8 is a block diagram showing a configuration of the information transmitting apparatuses 2000 of the first embodiment of the present invention. The information transmitting apparatuses 2000 comprises: a program transmit information receiving part 2001 that receives program transmit information 500 transmitted by the program transmit information transmitting part 107 of the transmit scheduling apparatus 100; a program transmit information management part 2002 that manages received program transmit information 500; a program information creating part 2003 that creates program information 800 from the program transmit information 500; a program information management part 2004 that manages the program information 800; a contents management part 2005 that manages programs and data contents to be transmitted; and a transmitting part 2006 that transmits programs and data contents to the receiving machine 3000.

### (Detailed description of the program information 800)

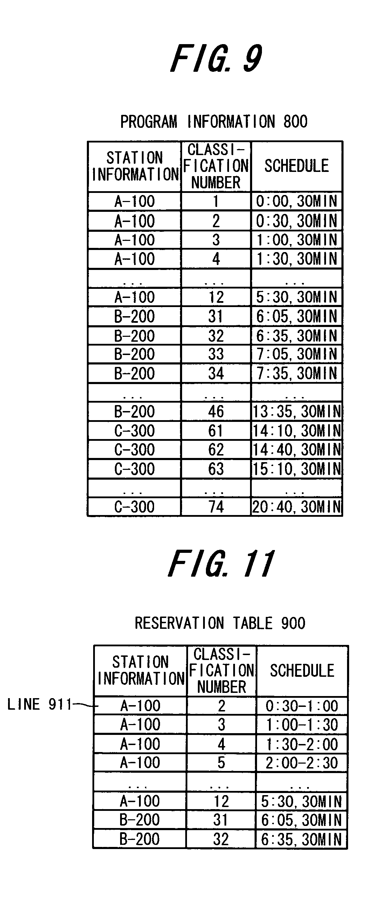

FIG. 9 is a schematic diagram showing an example of the program information 800. The program information 800 consists of station information, transmit schedule, and contents classification number. The program information 800 is information for telling the receiving machine 3000 how many minutes what data contents are to be transmitted from which broadcasting station and channel at what time. The program information 800 is created from the program transmit information 500 transmitted from the transmit scheduling apparatus 100. The program transmit information receiving part 2001 receives the program transmit information 500 transmitted from the transmit scheduling apparatus 100. The program transmit information management part 2002 manages the program transmit information 500 received by the program transmit information receiving part 2001. Although the program transmit information management part 2002 is realized by a database or the like, the present invention places no special limitation upon the form of realizing it.

The program information creating part 2003 creates the program information 800 from the program transmit information 500. At this time, the program information creating part 2003 also performs conversion into the format of data contents transmitted from the transmitting part 2006. Conversion is made into the format of private section data of MPEG2 transport stream. The MPEG2 transport stream is described in detail in ISO/IEC standard 13818-1 (MPEG2 system) specifications. The present invention does not limit to that format. The program information management part 2004 manages the program information 800 created by the program information creating part 2003. Although the program information management part 2004 is realized by a database or the like, the present invention places no special limitation upon the form of realizing it.

The contents management part 2005 manages contents transmitted by the information transmitting apparatuses 2000. Although the contents management part 2005 is realized by a database, semiconductor memory, hard disk, or the like, the present invention places no special limitation upon the form of realizing it. The transmitting part 2006 multiplexes the program information 800 held by the program information management part 2004 and contents held by the contents management part 2005 into an MPEG2 transport stream for transmission. Contents are multiplexed into an MPEG2 transport stream for transmission according to schedules contained in the program information 800. The present invention does not limit to MPEG2 transport streams.

### (Detailed description of the receiving machine 3000)

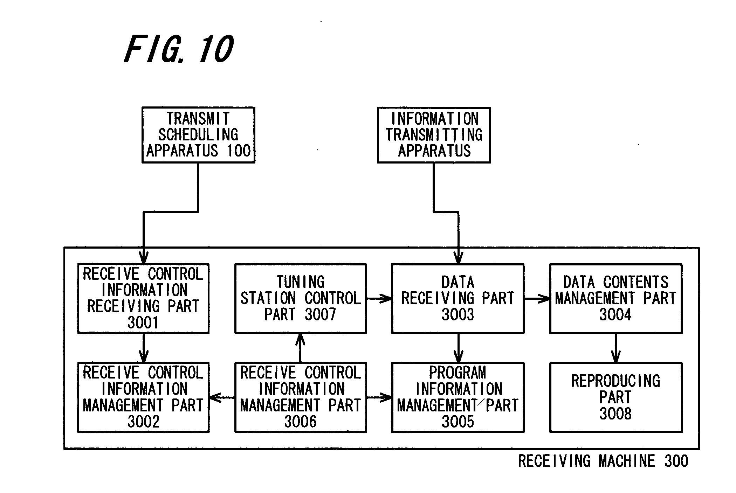

FIG. 10 is a block diagram showing a configuration of the receiving machine 3000 of the first embodiment of the present invention. The receiving machine 3000 comprises: a receive control information receiving part 3001 that receives receive control information 400; a receive control information management part 3002 that holds the receive control information 400; a data receiving part 3003 that receives program information 800 and contents; a data contents management part 3004 that holds data contents, of contents received by the data receiving part 3003; a program information management part 3005 that holds the program information 800 received by the data receiving part 3003; a reserving part 3006 that reserves contents to be received; a station tuning control part 3007 that tunes a tuner to a channel of a broadcasting station to receive from, according to a request from the reserving part 3006; and a reproducing part 3008 that reproduces received data contents.

The receive control information receiving part 3001 receives receive control information 400 transmitted from the transmit scheduling apparatus 100. An interface between the receive control information receiving part 3001 and the transmit scheduling apparatus 100 may be either broadcast or communications. The receive control information management part 3002 holds and manages received receive control information 400. The reserving part 3006 gets the receive control information 400 from the receive control information management part 3002 and the program information 800 from the program information management part 3005, retrieves station information and contents classification number contained in the receive control information 400 from the program information 800, and registers the station information and transmit schedule of contents to be stored in a reservation table 900.

### (Detailed description of the reservation table 900)

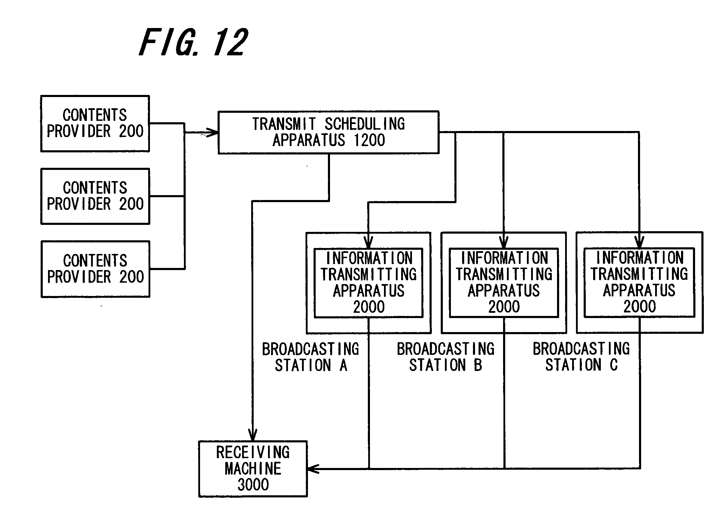

FIG. 11 is a schematic diagram showing an example of the reservation table 900 created by the reserving part 3006. The reservation table 900 consists of sets of station information, contents classification number, and reserved schedule. Line 911 of this example denotes that channel 100 of broadcasting station A is selected from 0:30 to 1:00 to receive and store contents of contents classification number 2. Schedules of the reservation table may also be specified by combinations of a start time and a broadcasting period.

### (Description of the creation of the reservation table 900 by the reserving part 3006)

The reserving part 3006 gets the receive control information 400 from the receive control information management part 3002. The reserving part 3006 gets a contents classification number and station information from the program information 800 hold by the program information management part 3005 to check for the existence of a contents classification number and station information the same as those in the receive control information 400. If they exist and a schedule thereof is later than current time, the station information, contents classification number, and schedule are written to the reservation table 900. If the reservation table has no sufficient space to contain more information, the contents classification number, the station information, and schedule are written after deleting the contents classification number, station information, and schedule of contents scheduled latest in the reservation table. In this way, all program information is read to create the reservation table 900.

The reserving part 3006 may create the reservation table at the time of reception of program information or at a predetermined time interval. The reserving part 3006 outputs the created reservation table 900 to the station tuning control part 3007. The station tuning control part 3007 reads the reservation table 900 received from the reserving part 3006 to get information of contents of a transmit schedule nearest to current time. In this example, assuming that current time is 0:15, the nearest schedule is 0:30 of contents classification number 2 of channel 100 of broadcasting station A.

The station tuning control part 3007, when current time reaches the time of the transmit schedule contained in the reservation table, gets the station information and contents classification number of contents scheduled to be transmitted at that time from the reservation table 900, and directs the data receiving part 3003 to tune a tuner to a broadcasting station and channel indicated by the station information to make a request to receive contents of the contents classification number. In this example, since contents having start time of 0:30 are channel 100 of broadcasting station A of contents classification number 2, the station tuning control part 3007 directs the data receiving part 3003 to select channel 100 of broadcasting station A to make a request to receive and store contents of contents classification number 2.

The station tuning control part 3007 reads the reservation table 900 again to obtain broadcast end time of the contents of contents classification number 2. The station tuning control part 3007, when the broadcast end time (1:00) is reached, directs the data receiving part 3003 to terminate the reception and storage of the contents. The station tuning control part 3007 reads information of contents of a transmit schedule second nearest to the current time and, in the same way as described above, directs the data receiving part 3003 to perform station tuning (or selection), contents reception and storage, and the termination of reception and storage at the timing of broadcast start time and end time of each contents. If broadcast start time of the next reservation is identical with broadcast end time of the preceding reservation, reception and storage may continue without being terminated. In this example, from channel 100 of broadcasting station A, contents of contents classification number 3 are received from 1:00 to 1:30 and contents of contents classification number 4 are received from 1:30 to 2:00. From 6:05, a station is switched from channel 100 of broadcasting station A to channel 200 of broadcasting station B to receive and store contents of contents classification number 31.

The data receiving part 3003, which comprises a tuner and a decoder for receiving MPEG2 transport streams, tunes the tuner to a broadcasting station and channel number requested from the station tuning control part 3007. The data receiving part 3003 receives, as receive information, MPEG2 transport streams sent over broadcast via the tuner. The receiving part 3003 separates program information and contents from the received MPEG2 transport streams and outputs the program information to the program information management part 3005 and the data contents to the data contents management part 3004 so that they are respectively stored. The program information management part 3005 and the data contents management part 3004 are both realized by semiconductor memory having a data recording function, hard disk, optical disk, or the like.

The data receiving part 3003 determines whether a contents classification number contained in the received data contents matches a contents classification number requested for reception from the station tuning control part 3007, and only when they match, outputs the data contents to the data contents management part 3004. The reproducing part 3008 reads and reproduces data contents stored in the data contents management part 3004. In this way, the receiving machine 3000 can receive and store contents sent from plural broadcasting stations in accordance with transmit schedules organized by the transmit scheduling apparatus 100.

In this embodiment, the transmit scheduling apparatus 100 decides schedules to transmit contents of broadcasting stations. However, alternatively, the transmit scheduling apparatus 100 may decide only transmit time frames of the broadcasting stations and output the transmit time frames to the broadcasting stations so that the broadcasting stations receive transmit desire information from contents providers and decide schedules to transmit contents of the transmit desire information within the transmit time frames.

### (Second embodiment)

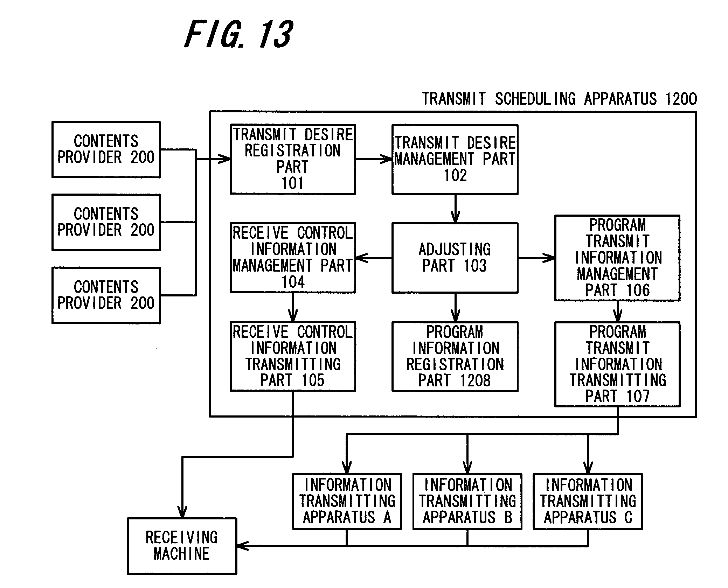

A second embodiment of the present invention will be described with reference to the accompanying drawings. An overall configuration of a system in the second embodiment is shown in FIG. 12 and the system comprises a transmit scheduling apparatus 1200, information transmitting apparatuses 2000, and a receiving machine 3000. FIG. 13 is a block diagram showing a configuration of the transmit scheduling apparatus 1200 of the second embodiment in the present invention.

The transmit scheduling apparatus 1200 comprises: a transmit desire registration part 101; a transmit desire management part 102; an adjusting part 1203; a receive control information management part 104; a receive control information transmitting part 105; a program transmit information management part 106; a program transmit information transmitting part 107; and a program information registration part 1208.

### (Detailed description of the transmit scheduling apparatus 1200)

The transmit desire registration part 101, the transmit desire management part 102, the receive control information management part 104, the receive control information transmitting part 105, the program transmit information management part 106, and the program transmit information transmitting part 107 are the same as those in the first embodiment. Hereinafter, portions unique to this embodiment will be described.

The program information registration part 1208 registers and holds program information (hereinafter referred to as exclusionary program information 4000) of contents (hereinafter referred to as exclusionary programs) other than store and forward broadcast service, scheduled to send from broadcasting stations. The adjusting part 1203 decides a broadcasting station and channel to transmit contents desired to transmit by contents providers, and a transmit schedule for the contents, from the transmit desire information 300 held by the transmit desire management part 102 and the exclusionary program information 4000 held by the program information registration part 1208. The transmit desire information 300 is the same as that in the first embodiment.

### (Detailed description of the exclusionary program information 4000)

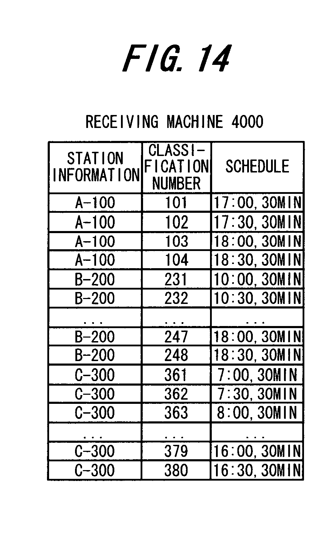

FIG. 14 is a schematic diagram showing an example of exclusionary program information 4000, which is program information of contents other than store and forward broadcast service. The format thereof is the same as the format of program information. Individual broadcasting stations beforehand create program information scheduled to broadcast and register exclusionary program information 4000 in the program information registration part 1208. FIG. 14 shows that, from channel 100 of broadcasting station A, contents of contents classification number 101 are transmitted for 30 minutes from 17:00 as contents other than store and forward broadcast service.

### (Description of processing of the adjusting part 1203)

In the second embodiment, the adjusting part 1203 creates a transmit schedule table 720 from the transmit desire information 300 and the exclusionary program information 4000 as described below. The format of the transmit schedule table 720 is the same as that in the first embodiment. It is understood from the transmit desire information 300 that the sum of transmit time of contents desired to transmit for channels A-100, B-200, and C-300 is 6, 8, and 7 hours, respectively.

### (Description of transmit schedule decision processing by the adjusting part 1203)

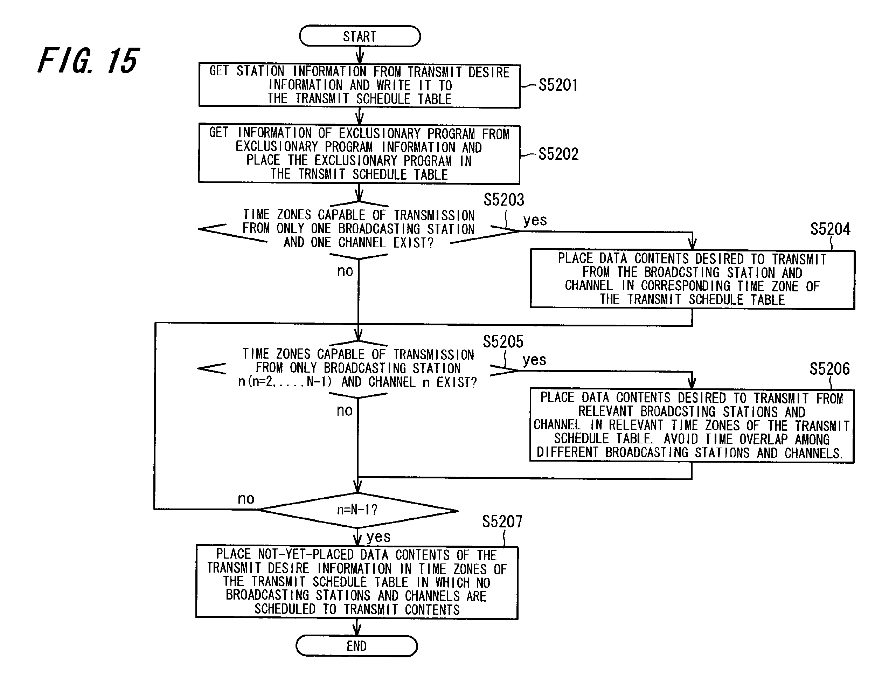

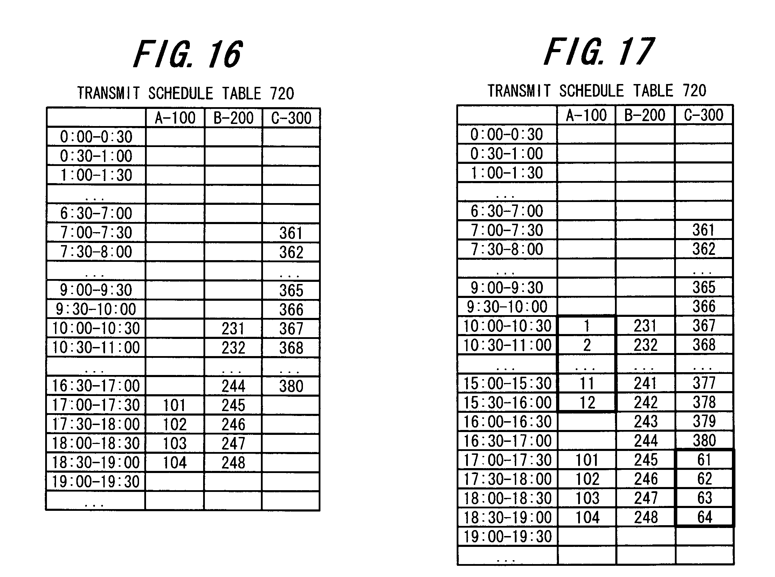

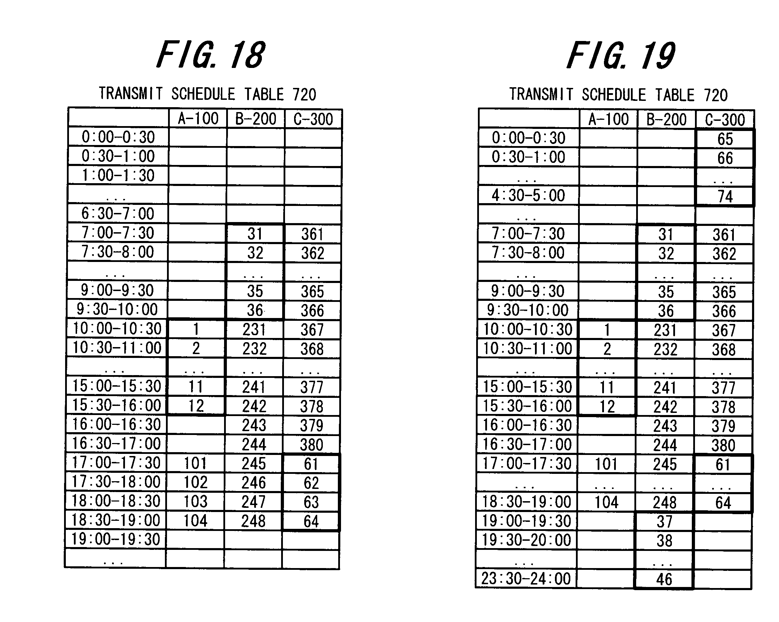

Transmit schedule decision processing by the adjusting part 1203 will be described using a flowchart of FIG. 15.
(1) The adjusting part 1203 gets station information from the transmit desire information 300 and writes it to station information of the transmit schedule table 720 (S5201).
(2) The adjusting part 1203 gets station information, contents classification numbers, and transmit schedules of contents from the exclusionary program information 4000 and writes the contents classification numbers to corresponding fields of the transmit schedule table 700 (S5202). FIG. 16 shows a state in which contents classification numbers of all contents of the exclusionary program information 4000 of FIG. 14 have been written to the fields of corresponding station information and transmit schedules of the transmit schedule table 720. In this example, since schedules of 24 hours are created and A-100, B-200, and C-300 transmit exclusionary programs for 2, 9, and 10 hours, respectively, idle times permitted to transmit contents of store and forward broadcast service are 22 (= 24 - 2) hours for A-100, 15 (= 24 - 9) hours for B-200, and 14 (= 24 - 10) hours for C-300.
(3) The adjusting part 1203 gets contents classification numbers, station information, and transmit time from lines of the transmit desire information 300. The adjusting part 1203 retrieves transmit schedules capable of transmission from only one channel from the transmit schedule table 720 (S5203), and writes got contents classification numbers to corresponding transmit schedules of the transmit schedule table 720 (S5204). For example, since both B-200 and C-300 are scheduled to transmit exclusionary programs in a period from 10:00 to 17:00 and only A-100 can transmit store and forward broadcast contents during the period, in the transmit desire information 300, a transmit schedule for contents desired to transmit from A-100 is placed in a period from 10:00 to 16:00. The adjusting part 1203 performs this processing for all transmit desire information 300. For example, since both A-100 and B-200 are scheduled to transmit exclusionary programs in a period from 17:00 to 19:00 and only C-300 can transmit store and forward broadcast contents during the period, in the transmit desire information 300, a transmit schedule for contents desired to transmit from C-300 is placed in a period from 17:00 to 19:00.
   Since data contents of 6, 0, and 2 hours are placed as transmit schedules for A-100 in (3), idle times of A-100, B-200, and C-300 are 16 (= 22 - 6) hours, 15 (= 15 - 0) hours, and 12 (= 14 - 2) hours, respectively. The sum of transmit times of contents desired to transmit for A-100, B-200, and C-300, not placed in the transmit schedule table 720 at a current point is 0 (= 6 - 6) hours, 8 (= 8 - 0) hours, and 5 (= 7 - 2) hours, respectively.
(4) The adjusting part 1203 retrieves transmit schedules capable of transmission from channel n (n is 2, 3, ... the number of channels contained in the transmit desire information 300 minus one), of broadcasting stations contained in the transmit desire information 300 (S5205), and places data contents desired to transmit from relevant broadcasting stations and channels in time zones of corresponding transmit schedules of the corresponding broadcasting stations and channels of the transmit schedule table 720 (S5206). They are placed so that time zones of contents transmitted from different broadcasting stations and channels do not overlap each other. An example of this processing is described below. For example, the adjusting part 1203 retrieves transmit schedules capable of transmission over two broadcasting stations from the transmit schedule table 720 described in (3). In FIG. 17, only broadcasting station C is scheduled to transmit exclusionary programs in a period from 7:00 to 10:00 and store and forward broadcast contents can be transmitted from broadcasting station A or B in the period. In this case, the adjusting part 1203 gets, from the transmit desire information 300, station information, contents classification numbers, and transmit times of data contents which are desired to transmit from broadcasting station A or B and are not yet set in the transmit schedule table 720 in (3), and places the contents classification numbers in the transmit schedule table in the time zone (7:00 to 10:00). In this case, since all data contents desired to transmit to broadcasting station A are already placed in (3), data contents (for example, contents classification numbers 31 to 36) for B-200 in the transmit desire information 300 are placed to continue in terms of time in the time zone. In this case, any placement method is permitted unless there is overlap in terms of time in A-100 and B-200. FIG. 18 is an example of the transmit schedule table 720 showing results of this processing. As a result, since data contents of 0 hours, 3 hours, and 0 hours are placed as transmit schedules of A-100, idle times of A-100, B-200, and C-300 are 16 hours, 12 (= 15 - 3) hours, and 12 hours, respectively. The sum of transmit times of contents desired to transmit for A-100, B-200, and C-300, not placed in the transmit schedule table 720 at a current point is 0 (= 6 - 6) hours, 5 (= 8 - 3) hours, and 5 hours, respectively.
(5) The adjusting part 1203 places contents classification numbers of data contents of the transmit desire information 300 that are not yet placed in the transmit schedule table 720 in (3) and (4), in time zones (time zones except (2), (3), and (4)) of the transmit schedule table 720 in which no broadcasting stations are scheduled to transmit contents (S5207). At this time, the adjusting part 1203 places data contents for one broadcasting station and channel in one of the above described time zones. After all data contents for one broadcasting station and channel have been placed, if there are idle times in the above described time zone, data contents for a different channel are placed continuously. FIG. 19 is an example of the transmit schedule table 720 showing results of this processing. In this example, no broadcasting stations are scheduled to transmit contents from 0:00 to 7:00 and therefore in this time zone, data contents (contents classification numbers 65 to 74) for broadcasting station C are placed to continue in terms of time. Since no broadcasting stations are scheduled to transmit contents after 19:00, in this time zone, data contents (contents classification numbers 37 to 46) for broadcasting station B-200 are placed to continue in terms of time. A method of placing data contents in the above described unused time zone is not subjected to special limitations if data contents contained in the transmit desire information 300 do not overlap each other in terms of time.

FIG. 19 is an example of the transmit schedule table 720 created by the adjusting part 1203 deciding transmit schedules of data contents contained in the transmit desire information 300 in (1) to (5). As in the first embodiment, the adjusting part 1203 creates receive control information from the transmit desire information 300 and program transmit information from the transmit schedule table 720. The adjusting part 1203 creates the receive control information only for contents corresponding to contents classification numbers contained in the transmit desire information 300 and not for contents contained in the exclusionary program information 4000. The information transmitting apparatus in this embodiment is the same as that in the first embodiment and program information 820 is created from program transmit information and exclusionary program information 4000 held by the program transmit information management part 2002.

### (Description of the program information 820)

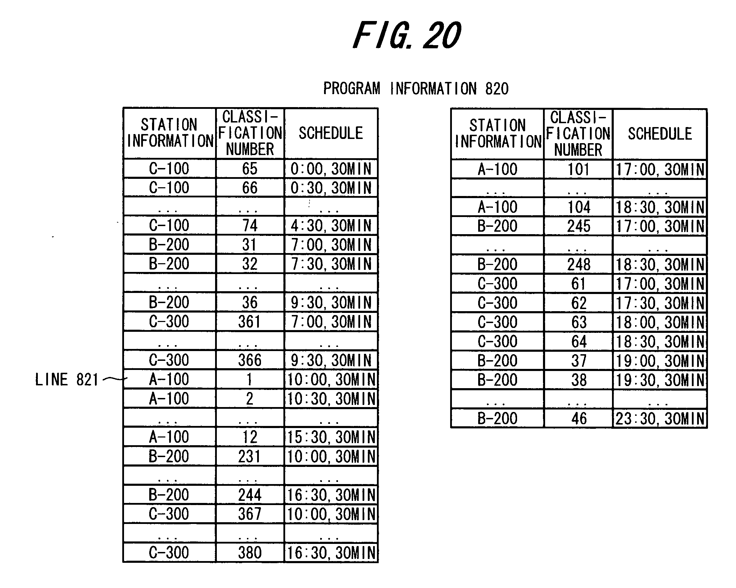

FIG. 20 is a schematic diagram showing an example of the program information 820. The program information 820 consists of a combination of the exclusionary program information 4000 and program information created from program transmit information and is sorted in ascending order by time. In FIG. 20, line 821 indicates that data contents of contents classification number 1 are transmitted for 30 minutes from 10:00 in channel 100 of broadcasting station A (A-100), and line 822 indicates that data contents of contents classification number 61 are transmitted for 30 minutes from 17:00 in C-300. The receiving machine 3000 is the same as that in the first embodiment. Although the receiving machine 3000 receives the program information 820 containing the exclusionary program information 4000, since contents classification numbers contained in the exclusionary program information 4000 are not contained in receive control information, their contents, that is, contents other than store and forward broadcast service are not received for storage.

In this way, according to this embodiment, even in the case where broadcasting stations decided schedules of contents other than store and forward broadcast service previously, contents of store and forward broadcast service can be scheduled in idle times without overlapping in terms of time with other broadcasting stations. Although, in this embodiment, transmit schedules of contents of transmit desire information are decided in the transmit scheduling apparatus 1200, transmit time frames for broadcasting stations which are exclusive with transmit times of contents contained in exclusionary program information may be decided before deciding transmit schedules of the data contents in the transmit time frames. The transmit scheduling apparatus 1200 may create only transmit time frames in which broadcasting stations may transmit contents for store and forward broadcast service, and transmit them to an information transmitting apparatus of the broadcasting stations so that the information transmitting apparatus decides transmit schedules of contents contained in transmit desire information.

### (Third embodiment)

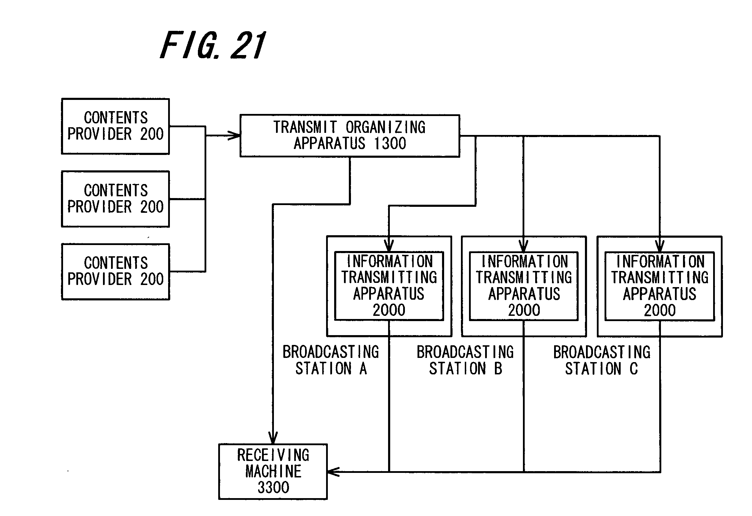

A third embodiment of the present invention will be described with reference to the accompanying drawings. An overall configuration of a system in the third embodiment is shown in FIG. 21 and the system comprises a transmit scheduling apparatus 1300, information transmitting apparatuses 2000, and a receiving machine 3300.

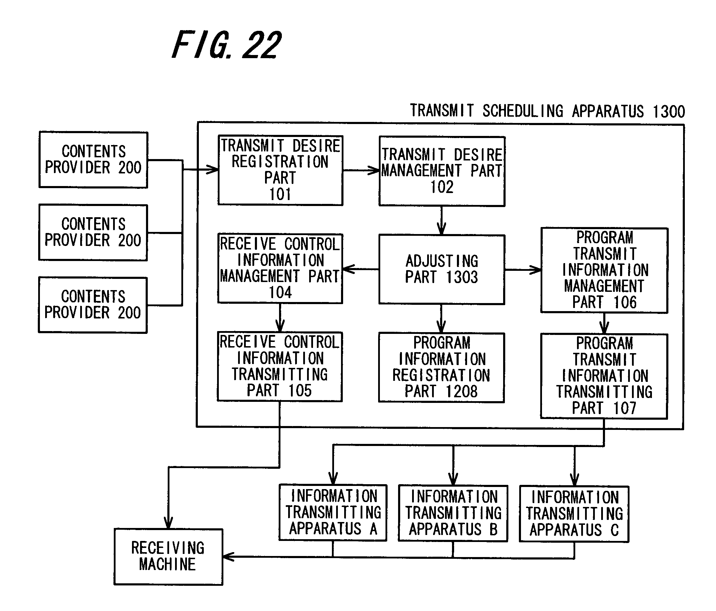

FIG. 22 is a block diagram showing a configuration of the transmit scheduling apparatus 1300 of the third embodiment in the present invention. The transmit scheduling apparatus 1300 comprises: a transmit desire registration part 101; a transmit desire management part 102; an adjusting part 1303; a receive control information management part 104; a receive control information transmitting part 105; a program transmit information management part 106; a program transmit information transmitting part 107; and a program information registration part 1208.

### (Detailed description of the transmit scheduling apparatus 1300)

The transmit desire registration part 101, the transmit desire management part 102, the receive control information management part 104, the receive control information transmitting part 105, the program transmit information management part 106, and the program transmit information transmitting part 107 are the same as those in the first embodiment, and the program information registration part 1208 is the same as that of the second embodiment. Hereinafter, portions unique to this embodiment will be described. The transmit desire registration part 101 registers transmit desire information 330 for indicating contents providers' desire to transmit contents for store and forward broadcast service.

### (Detailed description of transmit desire information 330)

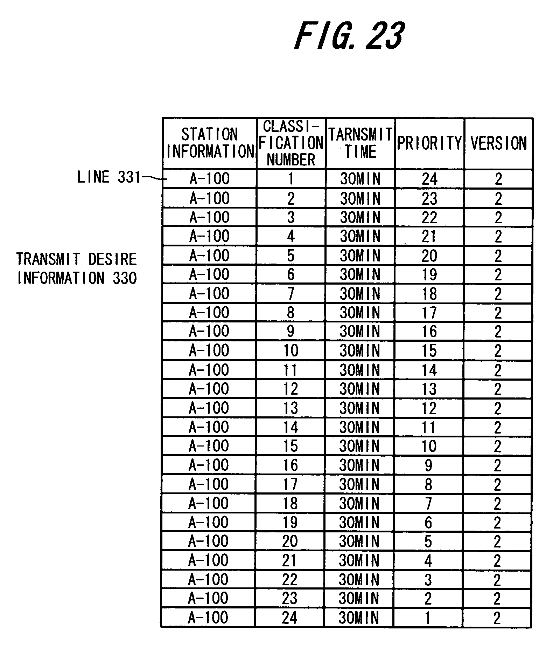

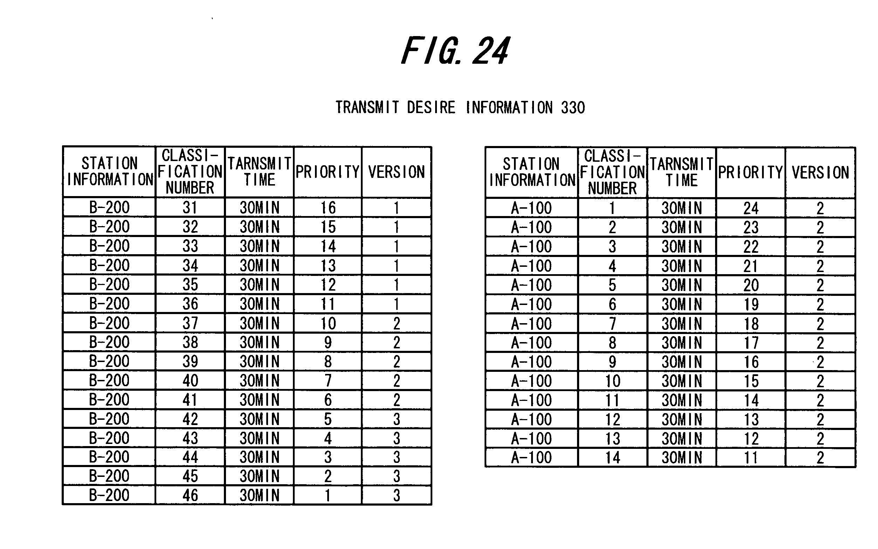

FIGS. 23 and 24 are schematic diagrams showing an example of the transmit desire information 330. The transmit desire information 330, which has items of contents classification number, station information, transmit time, priority, and version, provides desired information to the transmit scheduling apparatus 1300 with respect to each item of data contents provided by the contents providers 200. Contents classification number, station information, and transmit time are the same as those in the first and second embodiments.

Priority is a level for allowing contents to be preferentially stored in the receiving machine 3300; a greater value of it indicates a higher priority. The contents providers 200 assign different priorities to data contents desired to transmit from a same broadcasting station and channel. Version is the version of each contents and is added when information of the contents is updated. The receiving machine 3300 does not need to receive and store contents having a contents classification number and version the same as the contents classification number and version of contents already stored.

In FIG. 23, line 331 indicates a desire to transmit data contents having a contents classification number of 1, a priority of 24, and a version of 2 for 30 minutes from channel 100 of broadcasting station A. Hereinafter, a description will be made of how the adjusting part 1303 decides transmit schedules for the transmit desire information 330. In this example, the exclusionary program information 4000 is the same as that in the second embodiment.

### (Description of transmit schedule decision processing by the adjusting part 1303)

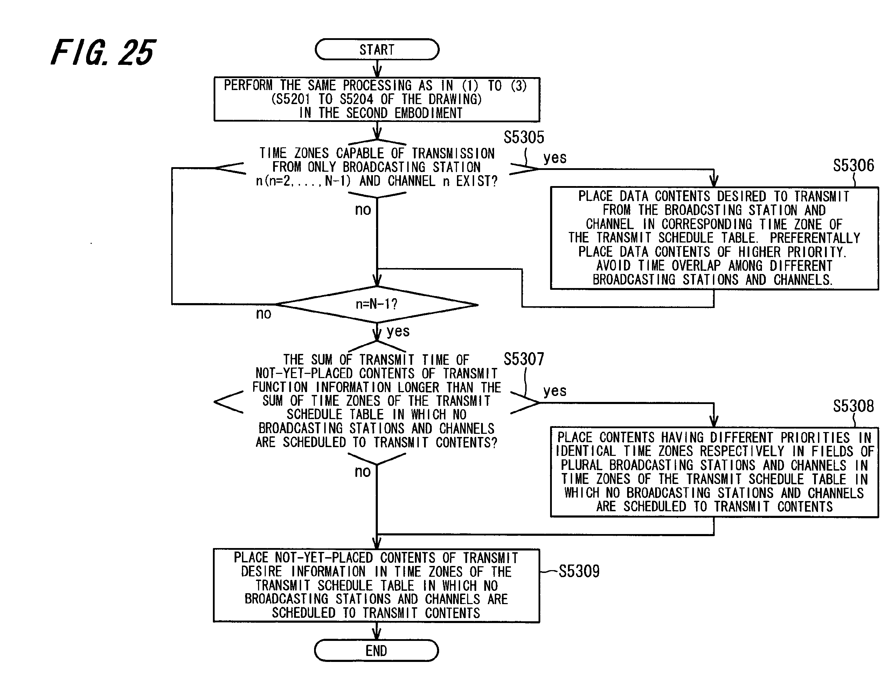

Transmit schedule decision processing by the adjusting part 1303 will be described using a flowchart of FIG. 25. In the third embodiment, the adjusting part 1303 creates a transmit schedule table 730 in a way described below from the transmit desire information 330 and the exclusionary program information 4000. The transmit schedule table 730 has priority and version items added to contents of the transmit schedule table of the first and second embodiments. In this example, it is understood from the transmit desire information 330 that the sum of transmit times of contents desired to transmit for A-100, B-200, and C-300 is 12, 8, and 7 hours, respectively. The adjusting part 1303 performs the same processing as in (1) to (3) (S5201 to S5204 of the drawing) of the second embodiment.

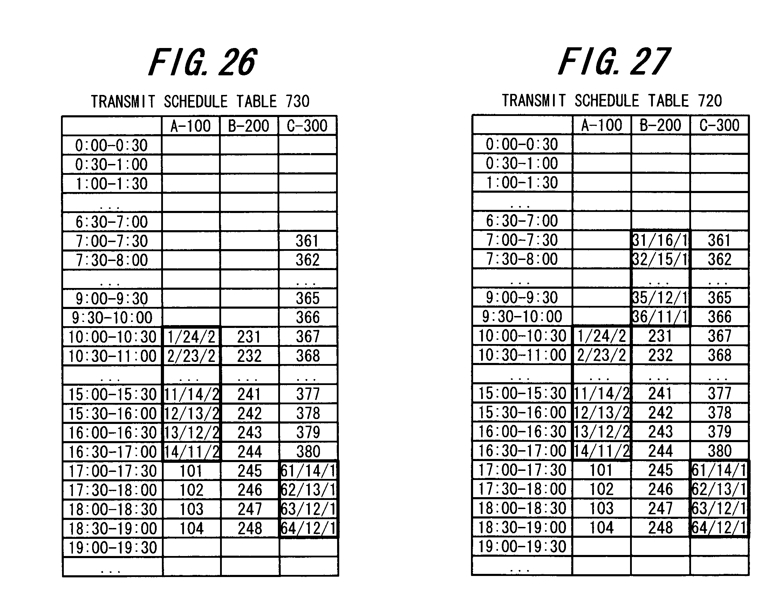

FIG. 26 is an example of the transmit schedule table 730 after the adjusting part 1303 performs processing of (1) to (3). In FIG. 26, "A/B/C" indicates data contents with contents classification number A, priority B, and version C. The respective idle times of A-100, B-200, and C-300 are 15 (= 22 - 7) hours, 15 (= 15 - 0) hours, and 12 (= 14 - 2) hours. The sum of transmit times of contents for A-100, B-200, and C-300, not placed in the transmit schedule table 730 at a current point is 5 (= 12 - 7), 8 hours, and 5 (= 7 - 2) hours, respectively.
(4) The adjusting part 1303 retrieves transmit schedules capable of transmission from channel n (n is 2, 3, ... the number of channels contained in the transmit desire information 300 minus one), of broadcasting stations contained in the transmit desire information 300 (S5305), and places data contents desired to transmit from relevant broadcasting stations and channels in time zones of corresponding transmit schedules of the corresponding broadcasting stations and channels of the transmit schedule table 730 (S5306). They are placed so that contents with a higher priority are placed with a higher priority and time zones of contents transmitted from different broadcasting stations and channels do not overlap each other. An example of this processing is described below.

For example, the adjusting part 1303 retrieves transmit schedules capable of transmission from two broadcasting stations and channels from the above described transmit schedule table 730. In FIG. 26, only C-300 is scheduled to transmit exclusionary programs in a period from 7:00 to 10:00 and store and forward broadcast contents can be transmitted from A-100 or B-200 in the period. In this case, the adjusting part 1303 gets, from the transmit desire information 330, station information, contents classification numbers, transmit times, priority, and version of data contents which are desired to transmit from broadcasting station A-100 or B-200 and are not yet set in the transmit schedule table 730 in (3), and places the contents classification numbers in the transmit schedule table in the time zone (7:00 to 10:00). In this case, data contents having higher priorities that are desired to transmit to A-100 and B-200 in the transmit desire information 330 are placed in the time zone with higher priorities. In this example, data contents for A-100 of priorities 24 to 11 are already placed. Data contents for B-200 of priorities 16 to 11, which have higher priorities than remaining data contents for A-100 of priorities 10 to 1, are placed in the time zone (7:00 to 10:00). As a result, the sum of transmit times of contents for A-100, B-200, and C-300 which are not yet placed in the transmit schedule table 730 are 5 hours, 5 (= 8 - 3) hours, and 5 hours, respectively. FIG. 27 is an example of the transmit schedule table 730 showing results of this processing. (5) The adjusting part 1303 places contents classification numbers of data contents of the transmit desire information 330 that are not yet placed in the transmit schedule table 730 at the point of (4), in time zones (time zones except (2), (3), and (4)) of the transmit schedule table 730 in which no broadcasting stations are scheduled to transmit contents.

To do this, the sum of time zones of the transmit schedule table 730 in which no broadcasting stations are scheduled to transmit contents is compared with the sum of transmit times of data contents not yet placed in the transmit schedule table (S5307). If the former is longer, scheduling is terminated after performing processing (6) described later.

In this case, time zones of the former are 0:00 to 7:00 and 19:00 to 24:00(*), 12 hours in total, while the sum of transmit times of data contents of the transmit desire information 330 that are not yet placed in the transmit schedule table is 15 hours, with 5 hours for A-100, 5 hours for B-200, and 5 hours for C-300. Accordingly, it is impossible to assign all these remaining data contents to the broadcasting stations without overlapping in terms of time. Namely, in the case where the former(*) is shorter, contents having different priorities in identical time zones are respectively placed in fields of plural broadcasting stations and channels in time zones of the transmit schedule table in which no broadcasting stations and channels are scheduled to transmit contents (S5308). Hereinafter, this processing will be described in detail.

The adjusting part 1303 places data contents for A-100 in any of the above described idle times(*). For example, data contents (contents classification numbers 15 to 24) for A-100 are placed continuously in a time zone of 0:00 to 5:00 of the transmit schedule table 730.

Next, the adjusting part 1303 places data contents for B-200 (contents classification numbers 7 to 16) in the same period of 0:00 to 5:00 of the transmit schedule table 730 so that the priorities of the data contents in the same time zones are different between those for A-100 and B-200. For example, since data contents for A-100 of contents classification number 15 and priority 10 are placed in a time zone of 0:00 to 0:30, data contents for B-200 of contents classification number 38 and priority 9 are placed in the time zone. In the same way, data contents of contents classification number 39 and priority 8 are placed in a time zone of 0:30 to 1:00. In this way, in fields (0:00 to 4:30) for B-200 of the transmit schedule table 730, data contents having priorities one smaller than the priorities of data contents for A-100 in identical time zones are respectively placed continuously. In the last time zone of 4:30 to 5:00, the remaining data contents of contents classification number 37 and priority 10 are placed.

As a result, although data contents for A-100 and B-200 are placed in overlapped form in a time zone of 0:00 to 5:00, the priorities of the respective data contents are always different in identical time zones.
(6) The adjusting part 1303 places not-yet-placed data contents in the time zones indicated by (*) in which no data contents were placed in (5) (S5309). In this example, data contents (contents classification numbers 65 to 74) for C-300 are placed continuously in the remaining time zone of 19:00 to 24:00. Part of the data contents may be placed in a time zone of 5:00 to 7:00.

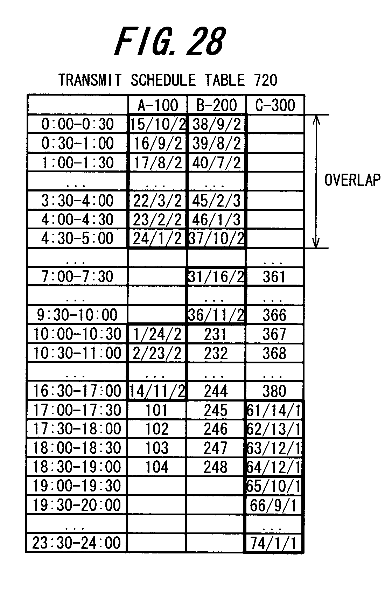

FIG. 28 is an example of the transmit schedule table 730 organized by the adjusting part 1303 in (5) and (6). In the case where data contents for particular channels are to be overlapped in a particular time zone, no special limitation is placed upon a method of placing the data contents if the priorities of the data contents for the both channels in the overlapping time zone are different.

As in the first and second embodiments, the adjusting part 1303 creates receive control information from the transmit desire information 330 and program transmit information from the transmit schedule table 730. Program transmit information 970 is created in the same way as in the first and second embodiments, except that only priorities are added to contents of program transmit information in the first and second embodiments.

An information transmitting apparatus in the third embodiment is similar to that in the first and second embodiments, except that priorities and versions are added to contents contained in program transmit information and program information 830; processing in the parts is the same as that in the first and second embodiments.

### (Description of the program information 830)

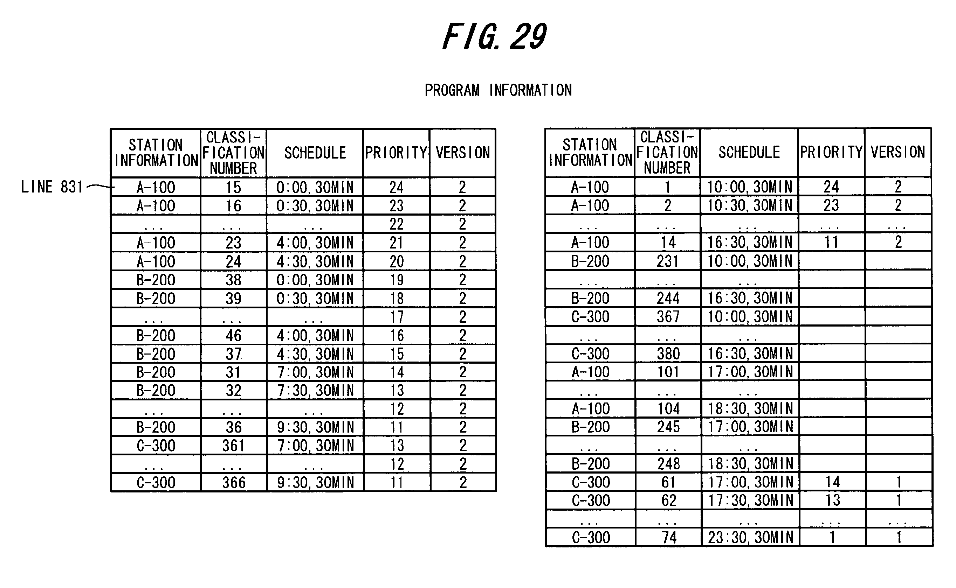

FIG. 29 is a schematic diagram showing an example of the program information 830. The program information 830 consists of a combination of the exclusionary program information 4000 and program information created from program transmit information and is sorted in ascending order by time. In FIG. 29, line 831 indicates that data contents of contents classification number 15, priority 10, and version 2 are transmitted for 30 minutes from 0:00 in A-100. The program information 830 is the same as that in the first and second embodiments, except that only priorities and versions are added to contents.

### (Description of the receiving machine 3300)

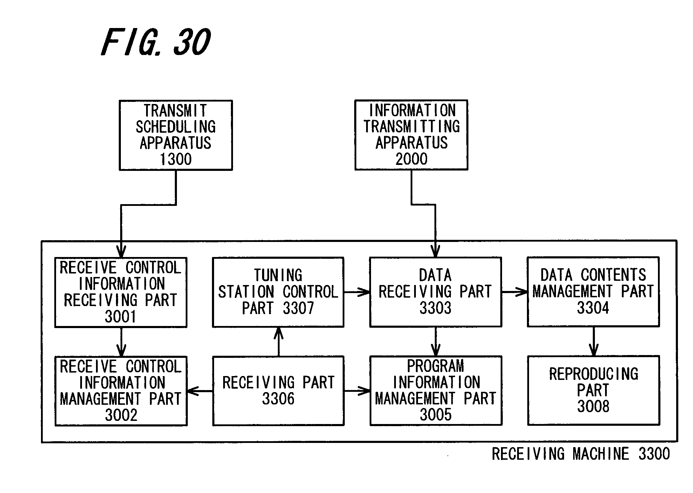

FIG. 30 is a block diagram showing a configuration of the receiving machine 3300 of the third embodiment. The receiving machine 3300 comprises: a receive control information receiving part 3001; a receive control information management part 3002; a data receiving part 3303; a data contents management part 3304 that holds received data contents; a program information management part 3005; a reserving part 3306 that reserves contents to be received; a station tuning control part 3307 that tunes a tuner to a channel of a broadcasting station to receive from, according to a request from the reserving part 3306; and a reproducing part 3008 that reproduces received data contents.

In the receiving machine 3300, the receive control information receiving part 3001, the receive control information management part 3002, the program information management part 3005, and the reproducing part 3008 are the same as those in the first and second embodiments. The data contents management part 3304 holds a storage contents list 3350 in addition to stored data contents.

### (Description of the storage contents list 3350)

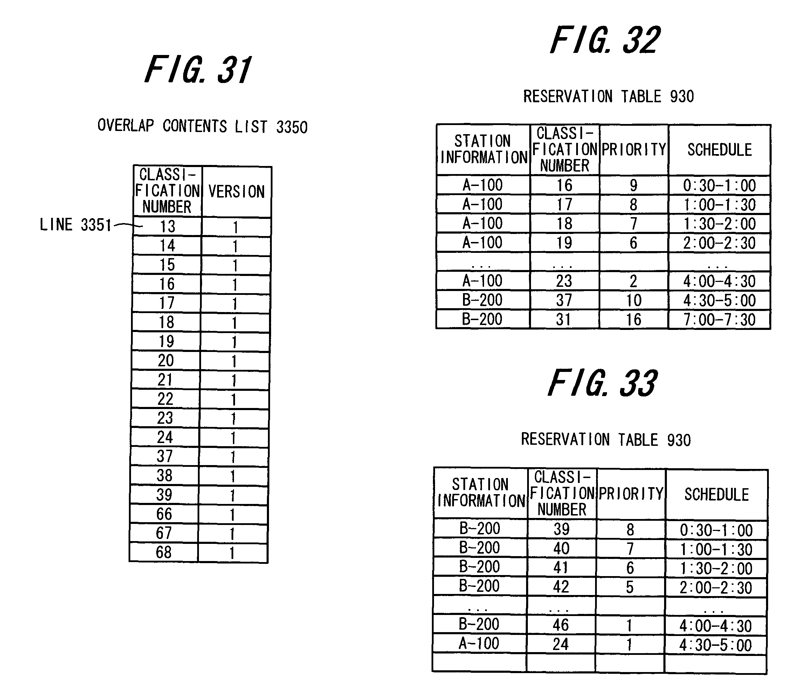

FIG. 31 is a schematic diagram showing an example of the storage contents list 3350 held by the data contents management part 3304. The data contents list 3350 consists of contents classification numbers of data contents held by the data contents management part 3304 and stored versions of the contents. The data contents management part 3304, when storing data contents received by the data receiving part 3303, records a contents classification number of the data contents and a version specified by the station tuning control part 3307 in the storage contents list 3350. Line 3351 shown in FIG. 31 indicates that the data contents management part 3304 stores version 1 of contents of contents classification number 13. The same is also true for other lines.

### (Description of processing of the reserving part)

The reserving part 3306 gets receive control information from the receive control information management part 3002 and program information from the program information management part 3005, retrieves station information and.contents classification numbers contained in the receive control information from the program information, and registers station information and transmit schedules of contents to be stored in the reservation table 930.

### (Detailed description of the reservation table 930)

FIG. 32 is a schematic diagram showing an example of the reservation table 930 created by the reserving part 3306. The reservation table 930 consists of sets of station information, contents classification numbers, reserved schedules, and priorities.

### (Description of creation of the reservation table 930 by the reserving part 3306)

The reserving part 3306 gets receive control information from the receive control information management part 3002. The reserving part 3306 gets contents classification numbers, station information, priorities, and versions from program information held by the program information management part 3005, and checks for the existence of contents classification numbers and station information the same as (or identical with) those in the receive control information. If they exist in the receive control information, the reserving part 3306 gets the versions of contents of the contents classification numbers from the storage contents list 3350 held by the data contents management part 3304 and compares them with the versions got from the program information. If the versions got from the program information are greater in value, the contents are eligible for being newly reserved. The reserving part 3306 checks whether the contents schedules overlapping in terms of time with those of the contents eligible for being newly reserved have been reserved in the reservation table 930. If not reserved, the contents classification numbers, station information, schedules, priorities, and versions of the contents are written to the reservation table 930.

If the contents schedules overlapping in terms of time have been already reserved, the priorities of the contents are got from the reservation table 930 and compared with those of the contents eligible for being newly reserved. If the contents eligible for being newly reserved are higher in priority, information of the existing contents overlapping in terms of time is deleted from the reservation table 930 and the contents classification numbers, station information, schedules, priorities, and versions of the contents eligible for being newly reserved are written. If the reservation table has no sufficient space to contain more information, the contents classification numbers, station information, schedules, priorities, and versions of contents that are scheduled later than the contents eligible for being newly reserved are deleted to write the contents classification numbers, station information, schedules, priorities, and versions of the contents eligible for being newly reserved. In this way, all program information is read to create the reservation table 930.

In the case of program information of FIG. 29, in 0:30 to 1:00, contents of channel 100 of broadcasting station A with contents classification number 16, priority 9, and version 2, and contents of channel 200 of broadcasting station B with contents classification number 39, priority 8, and version 2 overlap each other in terms of time. In this case, since the former is higher in priority, the reserving part 3306 registers the former in the reservation table 930. Thereafter, when contents of channel 100 of broadcasting station A with contents classification number 16 have been stored as reserved, the version of the contents of the storage contents list becomes 2. The reservation table 930 created in this way is as shown in FIG. 32.

For example, in the case where the reservation table 930 is created using the same program information on the next day, schedule overlap also occurs in 0:30 to 1:00, and contents of channel 100 of broadcasting station A with contents classification number 16 are higher in priority, but the version of the contents of the storage contents list became 2 in the previous storage, which is same as the version of the contents in the program information, indicating that the contents do not need to be stored. Therefore, this time, the reserving part 3306 registers the contents of channel 200 of broadcasting station B with contents classification number 39 in the reservation table 930. Hence, plural contents overlapping in terms of time can be stored. The reservation table 930 created in this way is as shown in FIG. 33.

The reserving part 3306 may create the reservation table 930 at the time of reception of program information or at a predetermined time interval. The reserving part 3306 outputs the created reservation table 930 to the station tuning control part 3307. The station tuning control part 3307 reads the reservation table 930 received from the reserving part 3306 to get information of contents of a transmit schedule nearest to current time. In this example, assuming that current time is 0:15, the nearest schedule is 0:30 of contents classification number 16 of channel 100 of broadcasting station A. The station tuning control part 3307, when current time reaches the time of the transmit schedule, gets the station information, contents classification number, and version of contents scheduled to be transmitted at that time from the reservation table 930, and directs the data receiving part to tune a tuner to a broadcasting station and channel indicated by the station information to make a request to receive contents of the contents classification number. In this example, since contents having start time of 0:30 are channel 100 of broadcasting station A of contents classification number 16, the station tuning control part 3307 directs the data receiving part 3303 to select channel 100 of broadcasting station A to make a request to receive and store contents of contents classification number 16.

The station tuning control part 3307 reads the reservation table 930 again to obtain broadcast end time of contents of contents classification number X. The station tuning control part 3307, when the broadcast end time (1:00) is reached, directs the data receiving part 3303 to terminate the reception and storage of the contents. The station tuning control part 3307 reads information of contents of a transmit schedule second nearest to the current time and, in the same way as described above, directs the data receiving part 3303 to perform station tuning, contents reception and storage, and the termination of reception and storage at the timing of broadcast start time and end time of each contents. In this example, from channel 100 of broadcasting station A, contents of contents classification number 17 are received from 1:00 to 1:30 and contents of contents classification number 18 are received from 1:30 to 2:00. From 4:30, a station is switched from broadcasting station A to broadcasting station B to receive and store contents of contents classification number 37.

The data receiving part 3303 tunes the tuner to a broadcasting station and channel number requested from the station tuning control part 3307 to receive program information and contents, and outputs the program information to the program information management part 3005, and data contents and a version specified from the station tuning control part 3307 to the data contents management part 3304 to respectively receive them. The data receiving part 3303 determines whether a contents classification number contained in the received data contents matches a contents classification number requested for reception from the station tuning control part 3307, and only when they match, outputs the data contents and the version specified from the station tuning control part 3307 to the data contents management part 3304. The data contents management part 3304 holds the received data contents and updates a version thereof in the field of the contents of the storage contents list 3350.

In this way, even if the transmit scheduling apparatus 1300 makes schedules to transmit store and forward broadcast service contents in same time zones from plural broadcasting stations and channels, the receiving machine 3300 interprets contents priorities and versions and selects contents to be reserved and stored, and thereby can receive and store both contents. Although, in this embodiment, priority is assigned to each contents of transmit desire information, priority may be assigned to broadcasting stations and channels.

### (Fourth embodiment)

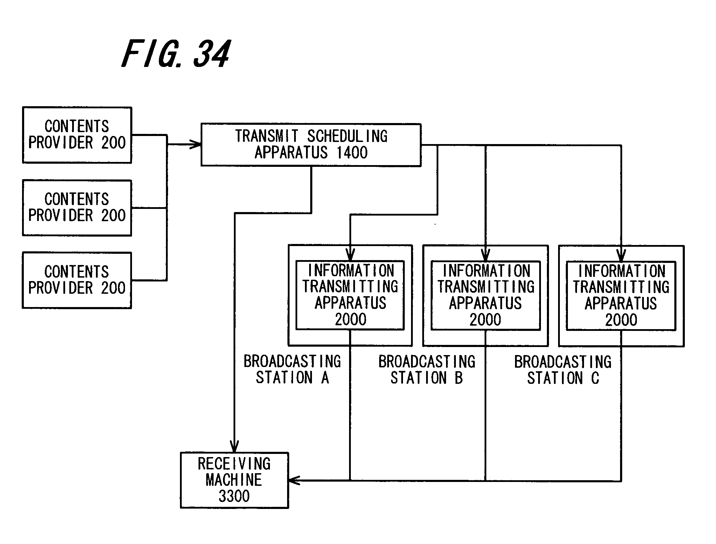

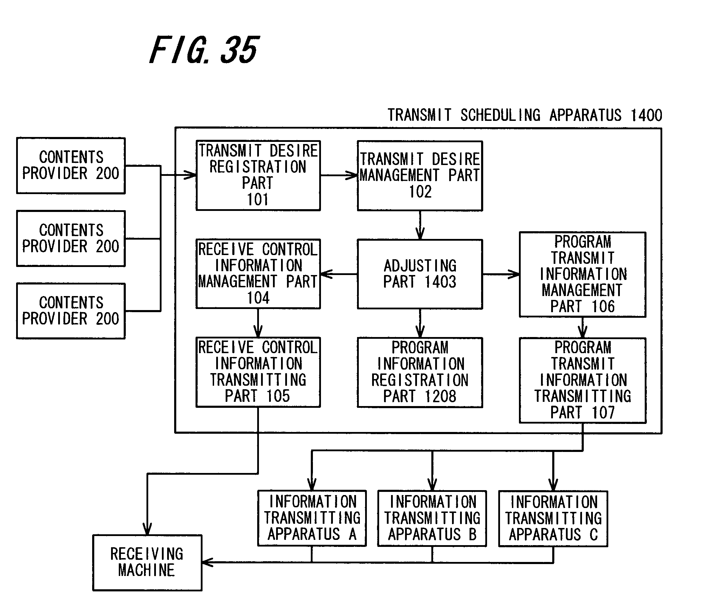

A fourth embodiment of the present invention will be described with reference to the accompanying drawings. An overall configuration of a system in the fourth embodiment is shown in FIG. 34 and the system comprises a transmit scheduling apparatus 1400, information transmitting apparatuses 2000, and a receiving machine 3300. FIG. 35 is a block diagram showing a configuration of the transmit scheduling apparatus 1400 of the fourth embodiment in the present invention. The transmit scheduling apparatus 1400 comprises: a transmit desire registration part 101; a transmit desire management part 102; an adjusting part 1403; a receive control information management part 104; a receive control information transmitting part 105; a program transmit information management part 106; a program transmit information transmitting part 107; and a program information registration part 1208.

### (Detailed description of the transmit scheduling apparatus 1400)

The transmit desire registration part 101, the transmit desire management part 102, the receive control information management part 104, the receive control information transmitting part 105, the program transmit information management part 106, and the program transmit information transmitting part 107 are the same as those in the first embodiment, and the program information registration part 1208 is the same as that of the second embodiment. Hereinafter, portions unique to this embodiment will be described.

The transmit desire registration part 101 registers transmit desire information 340 for indicating contents providers' desire to transmit contents for store and forward broadcast service.

### (Detailed description of transmit desire information 340)

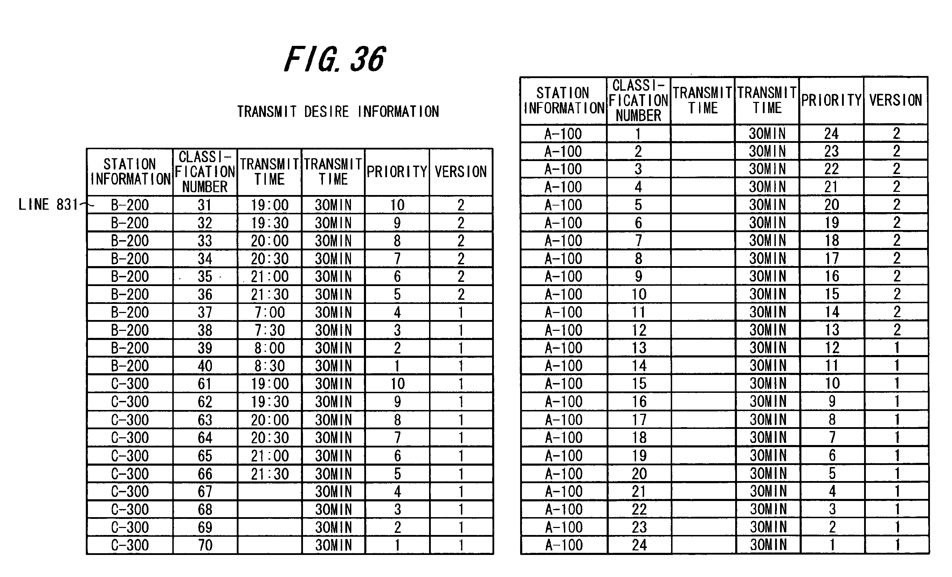

FIG. 36 is a schematic diagram showing an example of the transmit desire information 330. The transmit desire information 330, which has items of contents classification number, station information, transmit time, transmit time, priority, and version, provides desired information to the transmit scheduling apparatus 1400 with respect to each item of data contents provided by the contents providers 200. Contents classification number, station information, transmit time, priority, and version are the same as those in the first, second, and third embodiments.

Transmit time is time when the contents providers 200 desire to transmit contents. In the case where the contents providers 200 specify a transmit time for contents, it is assumed that no exclusionary program is transmitted at the time from a broadcasting station and channel desired to transmit the contents. In FIG. 36, line 341 indicates a desire to transmit data contents having a contents classification number of 31, a priority of 10, and a version of 2 for 30 minutes from 19:00 from B-200. Hereinafter, a description will be made of how the adjusting part 1403 decides transmit schedules for the transmit desire information 340. In this example, the exclusionary program information 4000 is the same as that in the second and third embodiments, as shown in FIG. 14.

### (Description of transmit schedule decision processing by the adjusting part 1403)

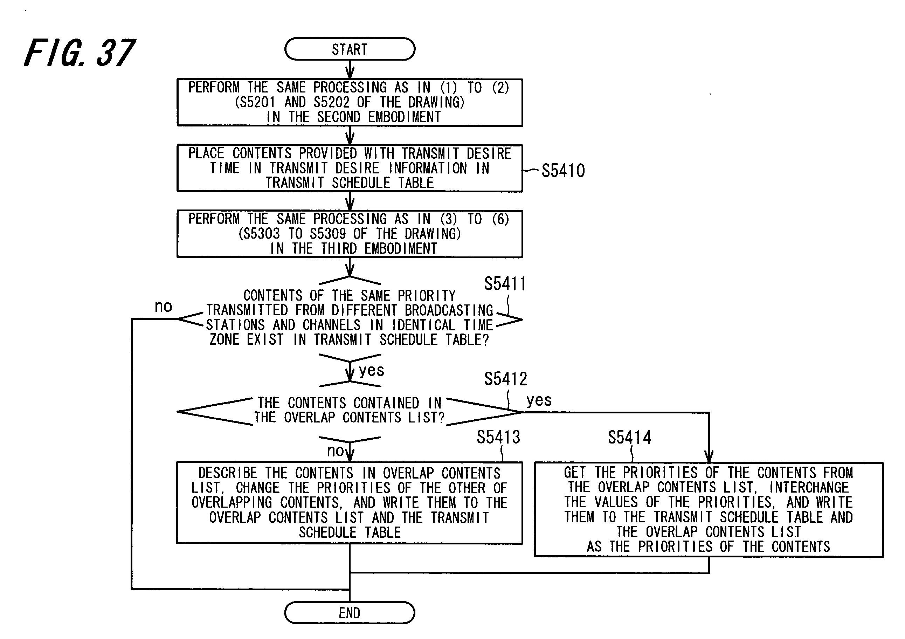

Transmit schedule decision processing by the adjusting part 1403 will be described using a flowchart of FIG. 37. In the fourth embodiment, the adjusting part 1403 creates a transmit schedule table 740 in a way described below from the transmit desire information 340 and the exclusionary program information 4000. The format of the transmit schedule table 740 is the same as that of the third embodiment. In this example, it is understood from the transmit desire information 340 that the sum of transmit times of contents desired to transmit for A-100, B-200, and C-300 is 12, 5, and 5 hours, respectively.

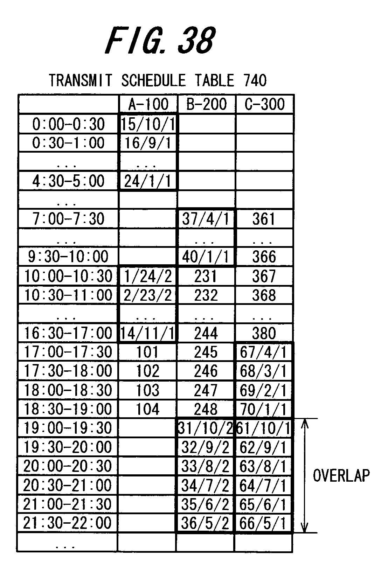

The adjusting part 1403 creates the transmit schedule table 740 as described below. The adjusting part 1403 first performs processing in (1) and (2) (S5201 and S5202 in FIG. 15) of the second embodiment, and then performs the following.
(a) The adjusting part 1403 gets a contents classification number, station information, transmit time, transmit time, priority, and version from each line of the transmit desire information 340. Contents classification numbers of contents provided with transmit time are placed in the transmit schedule table 740 (S5410).
   Contents of the transmit desire information 340, except for those described in (3), are placed according to (3), (4), (5), and (6) (S5203 and S5204 in FIG. 15 and S5305 to 5309 in FIG. 25) in the third embodiment. FIG. 38 is an example of the transmit schedule table 740 in which contents of the transmit desire information 340 are placed according to (a) and (3), (4), (5), and (6) of the third embodiment. In FIG. 38, "A/B/C" indicates data contents with contents classification number A, priority B, and version C.
(b) The adjusting part 1403 reads the transmit schedule table 740 and checks for the existence of contents of the same priority transmitted from different broadcasting stations and channels in a same time zone (S5411). If they exist, the adjusting part 1403 reads an overlap contents list 1450 to determine whether the contents are contained in the overlap contents list 1450 (S5412).

### (When not contained in the overlap contents list 1450. S5413)

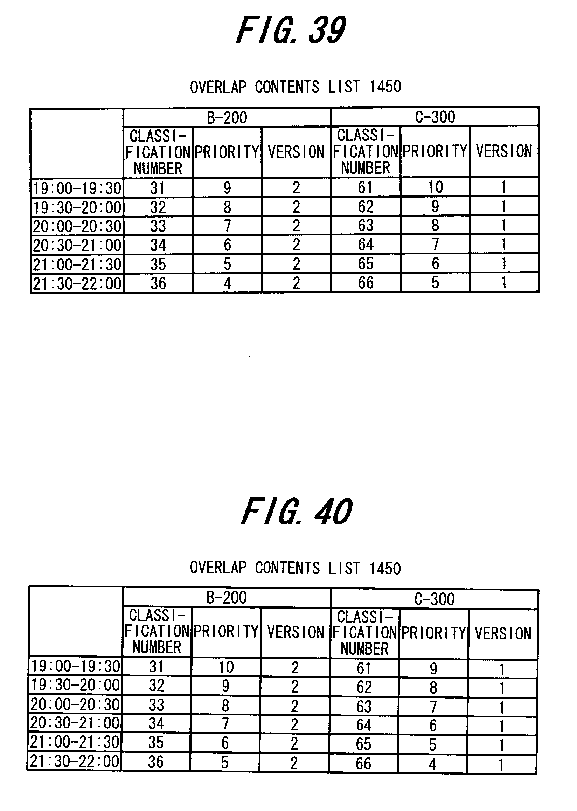

The adjusting part 1403 enters a transmit zone, broadcasting stations and channels, contents classification numbers, priorities, and versions of overlapping contents to the overlap contents list 1450. The adjusting part 1403 changes the priorities of the other of overlapping contents to update the priorities of the contents. For example, in this example, the priorities of contents for B-200 are decreased by one. As a result, the overlap contents list 1450 is as shown in FIG. 39. The adjusting part 1403 also modifies the priorities of the corresponding contents of the transmit schedule table 740 in the same way. As a result, the priorities of plural contents overlapping in a same time zone are different from each other.

### (When contained in the overlap contents list 1450. S5414)

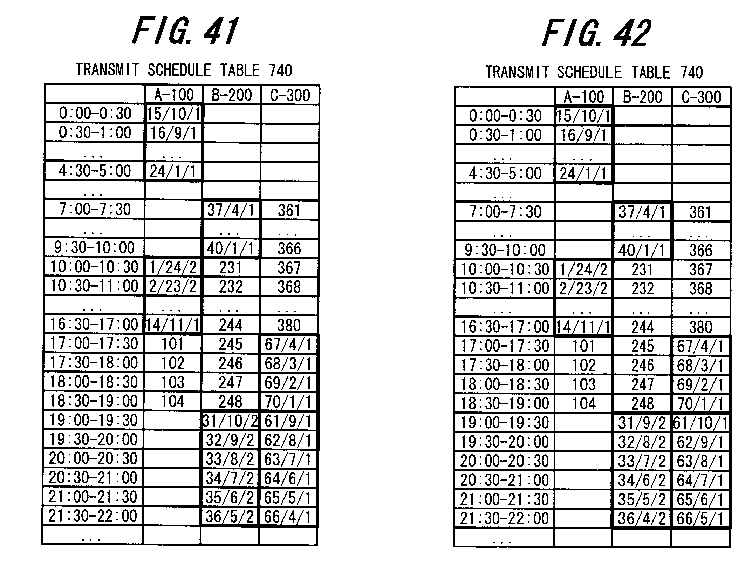

The adjusting part 1403 gets the priorities of the contents from the overlap contents list 1450 and writes them to the priority fields of the other of overlapping contents contained in the transmit schedule table 740. For example, in the overlap contents list 1450 of FIG. 39, since contents of contents classification number 31 for B-200 in 19:00 to 19:30 have a priority of 9 and contents of contents classification number 61 for C-300 have a priority of 10, the adjusting part 1403 changes the priority of the contents (contents classification number 31) for B-200 in the transmit schedule table 740 to 10 and the priority of the contents (contents classification number 61) for C-300 to 9. FIG. 41 shows the transmit schedule table at this time.

The adjusting part 1403 writes the priorities written to the transmit schedule table 740 to the overlap contents list 1450 as well. FIG. 40 shows the overlap contents list at this time. For example, when the transmit schedule table 740 is created the next time, in the overlap contents list 1450 of FIG. 40, since contents (contents classification number 31) for B-200 have a priority of 10 and contents (contents classification number 61) for C-300 have a priority of 9, in the transmit schedule table 740, the priority of the contents (contents classification number 31) for B-200 is set to 9 and the priority of the contents (contents classification number 61) for C-300 is set to 10, and they are respectively recorded as 9 and 10 in the overlap contents list 1450 as well. FIG. 39 shows the overlap contents list 1450 at this time and FIG. 42 shows the transmit schedule table 740 at this time. As a result, each time the transmit schedule table is created, the values of the priorities of overlapping contents interchange. Therefore, the reserving part of the receiving machine alternately reserves both contents according to their priorities, so that both contents can be preferentially reserved and received and stored.

### (Description of the overlap contents list 1450)

The overlap contents list 1450 records information of contents with the same priority whose transmit time zones overlap each other because of specification of contents desire transmit times in the transmit desire information 340. FIGS. 39 and 40 are examples of the overlap contents list 1450. The overlap contents list consists of transmit schedule, station information of overlapping contents, contents classification number, priority, and version. When the adjusting part 1403 modifies priority values by processing of (b), it also modifies priorities in the overlap contents list 1450. The next time that the transmit schedule table 740 is created, when the priorities of overlapping contents are modified, the priorities described in the current overlap contents list 1450 are respectively modified to the priority of the overlapping counterpart. As a result, each time the transmit schedule table is created, the values of the priorities of overlapping contents interchange.

As in the first, second, and third embodiments, the adjusting part 1403 creates receive control information from the transmit desire information 340 and program transmit information from the transmit schedule table 740. The receive control information and program transmit information created by the adjusting part 1403 are managed and transmitted in the same way as in the first, second, and third embodiments.

Hereinafter, the configuration and processing of the information transmitting apparatus are the same as those in the third embodiment. The receiving machine has the same configuration as that in the third embodiment, and as in the third embodiment, decides contents to be reserved from priorities and versions, when contents are transmitted from plural broadcasting stations and channels in a same time zone when a reservation table is created. In the case where contents are transmitted from plural broadcasting stations and channels in identical time zones by the transmit scheduling apparatus of this embodiment, since priorities are different from each other and interchange alternately each time, the receiving machine can reserve, receive, and store both overlapping contents at the same ratio.

In this way, even if the contents providers 200 specify contents transmission at desired times with the result that schedules are made to transmit store and forward broadcast service contents of the same priority in identical time zones from plural broadcasting stations and channels, the transmit scheduling apparatus 1400 assign different priority values to the overlapping contents and alternately interchange the priority values, whereby the receiving machine can reserve, receive, and store both overlapping contents at the same ratio.

### (Fifth embodiment)

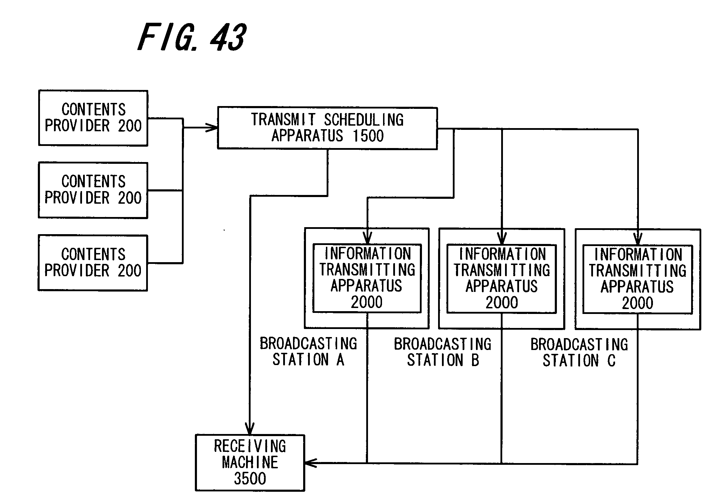

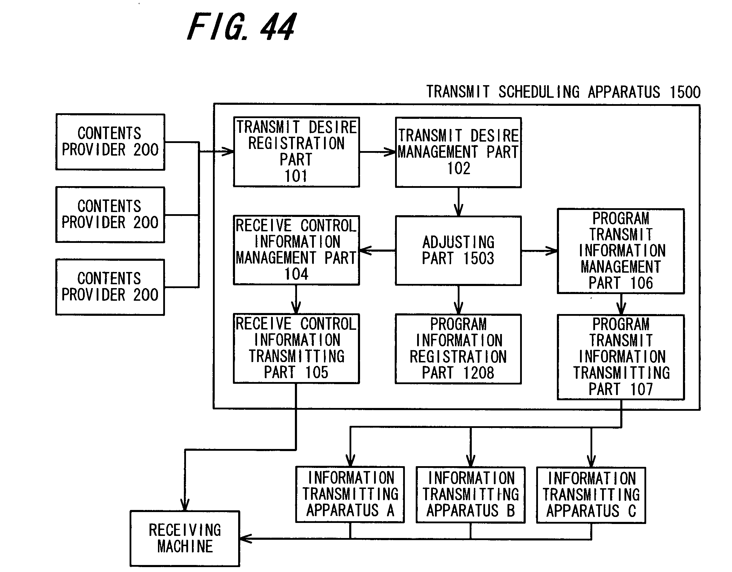

An overall configuration of a system in the fifth embodiment is shown in FIG. 43 and the system comprises a transmit scheduling apparatus 1500, information transmitting apparatuses 2000, and a receiving machine 3500. FIG. 44 is a block diagram showing a configuration of the transmit scheduling apparatus 1500 of the fifth embodiment in the present invention. The transmit scheduling apparatus 1500 is the same that in the second embodiment, except the adjusting part 1503, and is different from that in the second embodiment only in the formats of transmit desire information and program information to be handled.

### (Detailed description of the transmit scheduling apparatus 1500)

The transmit desire registration part 101, the transmit desire management part 102, the receive control information management part 104, the receive control information transmitting part 105, the program transmit information management part 106, and the program transmit information transmitting part 107 are the same as those in the first embodiment, and the program information registration part 1208 is the same as that of the first and second embodiments. Hereinafter, portions unique to this embodiment will be described. The transmit desire registration part 101 registers transmit desire information 350 for indicating contents providers' desire to transmit contents for store and forward broadcast service.

### (Detailed description of transmit desire information 350)

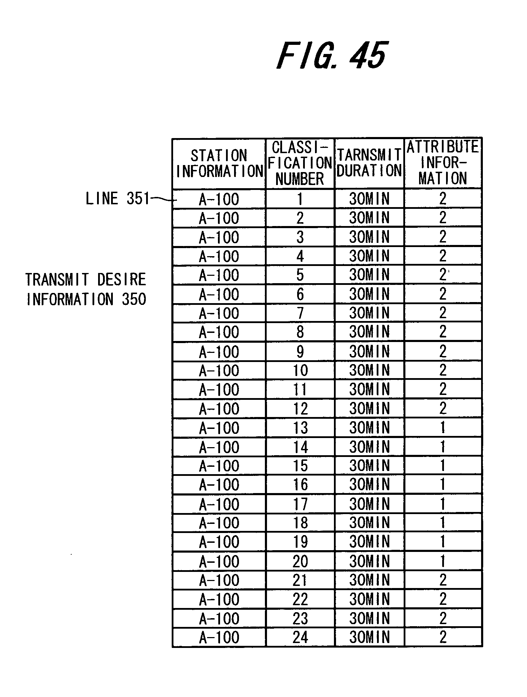

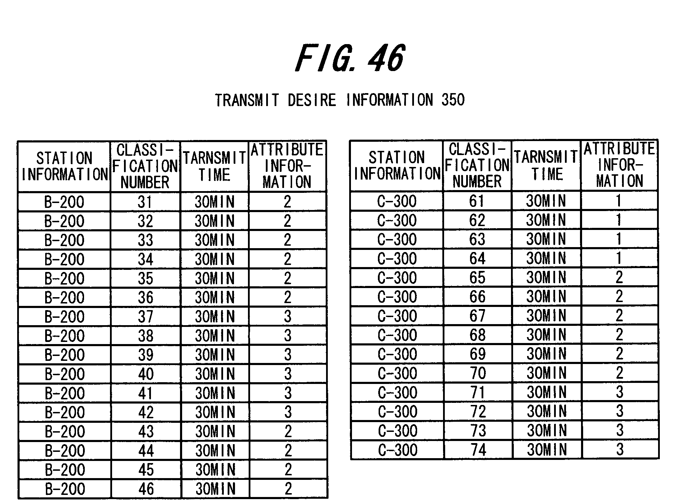

FIGS. 45 and 46 are schematic diagrams showing an example of the transmit desire information 350. The transmit desire information 330, which has items of contents classification number, station information, transmit time, and attribute information, provides desired information to the transmit scheduling apparatus 1500 with respect to each item of data contents provided by the contents providers 200. Contents classification number, station information, and transmit time are the same as those in the first and second embodiments.

Attribute information is encoded information of, e.g., preference attribute of user of a receiving machine or the product number and product grade of a receiving machine so that contents can be received and stored only by specific users and specific receiving machines. In FIG. 45, line 351 indicates a desire to transmit data contents having a contents classification number of 1 and attribute information of 2 for 30 minutes from 19:00 from an information transmitting apparatus A-100. Hereinafter, a description will be made of how the adjusting part 1503 decides transmit schedules for the transmit desire information 350. In this example, the exclusionary program information 4000 is the same as that in the second embodiment, as shown in FIG. 14.

### (Description of transmit schedule decision processing by the adjusting part 1503)

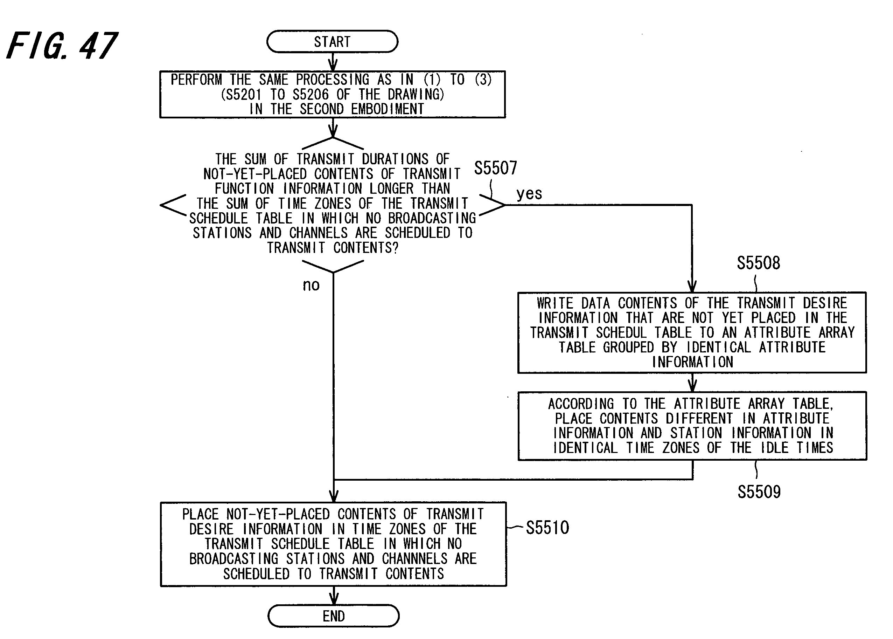

Transmit schedule decision processing by the adjusting part 1503 will be described using a flowchart of FIG. 47. In the fifth embodiment, the adjusting part 1503 creates a transmit schedule table 750 in a way described below from the transmit desire information 350 and the exclusionary program information 4000. The transmit schedule table 750 has the field of attribute information added to contents of the transmit schedule table of the first and second embodiments. In this example, it is understood from the transmit desire information 350 that the sum of transmit times of contents desired to transmit for A-100, B-200, and C-300 is 12, 8, and 7 hours, respectively.

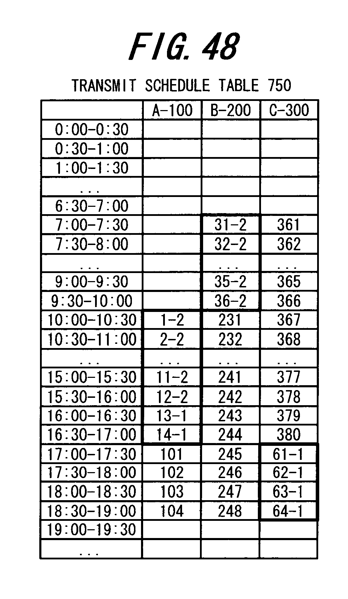

The adjusting part 1503 first performs processing in (1), (2), (3), and (4) (S5201 to S5206) of the second embodiment. The transmit schedule table 750 when the adjusting part 1503 has performed processing (1) to (4) is as shown in FIG. 48. In FIG. 48, "A-B" indicates data contents with contents classification number A and attribute information B.
(5) The adjusting part 1503 places contents classification numbers of data contents of the transmit desire information 330 that are not yet placed in the transmit schedule table 750 at the point of (4), in time zones (time zones except (2), (3), and (4)) of the transmit schedule table 750 in which no broadcasting stations are scheduled to transmit contents. To do this, the sum of time zones of the transmit schedule table 750 in which no broadcasting stations are scheduled to transmit contents is compared with the sum of transmit times of data contents not yet placed in the transmit schedule table (S5507). If the former is longer, scheduling is terminated after performing processing (6) (S5510) described later.

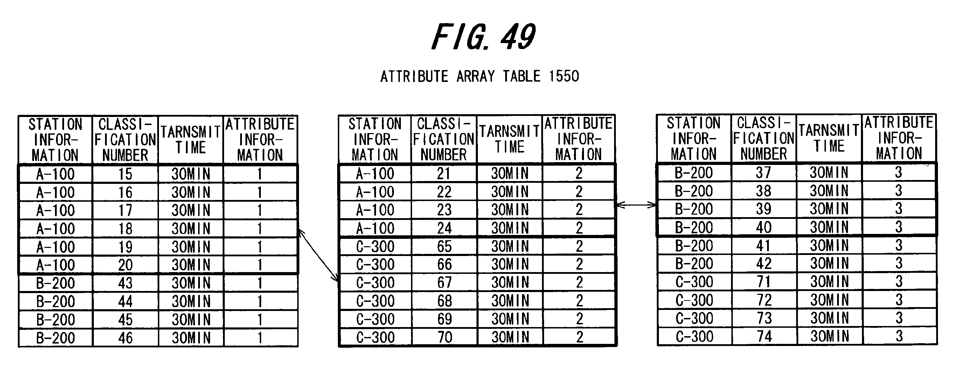

In this case, time zones of the former are 0:00 to 7:00 and 19:00 to 24:00(*), 12 hours in total, while the sum of transmit times of data contents of the transmit desire information 350 that are not yet placed in the transmit schedule table is 15 hours, with 5 hours for A-100, 5 hours for B-200, and 5 hours for C-300. Accordingly, it is impossible to assign all these remaining data contents to the broadcasting stations without time overlap. In this case, the adjusting part 1503 writes data contents of the transmit desire information 350 that are not yet placed in the transmit schedule table 750 to an attribute array table 1550 grouped by identical attribute information (S5508). FIG. 49 is an example of the attribute array table 1550 in this example. In FIG. 49, contents having attribute information 1 are contents for A-100 of contents classification numbers 15 to 20 and contents for B-200 of contents classification numbers 43 to 46; contents having attribute information 2 are contents for A-100 of contents classification numbers 21 to 24 and contents for C-300 of contents classification numbers 65 to 70; and contents having attribute information 3 are contents for B-200 of contents classification numbers 37 to 42 and contents for C-300 of contents classification numbers 71 to 74. The adjusting part 1503 places contents different in attribute information and station information in any of the above described idle times(*) (S5509).

Hereinafter, this processing (S5509) is described in detail. Contents for A-100 of contents classification numbers 15 to 20 (attribute information 1) and contents for C-300 of contents classification numbers 65 to 70 (attribute information 2), and contents for A-100 of contents classification numbers 21 to 24 (attribute information 2) and contents for B-200 of contents classification numbers 37 to 40 (attribute information 3) are respectively different from each other in attribute information and station information. The adjusting part 1503 places these contents in, e.g., 0:00 to 3:00 and 3:00 to 5:00 of corresponding station information fields of the transmit schedule information 750. In 0:00 to 3:00, contents for A-100 of contents classification numbers 15 to 20 (attribute information 1) and contents for C-300 of contents classification numbers 65 to 70 (attribute information 2) are placed, and in 3:00 to 5:00, contents for A-100 of contents classification numbers 21 to 24 (attribute information 2) and contents for B-200 of contents classification numbers 37 to 40 (attribute information 3) are placed. As a result, the sum of transmit times of data contents not yet placed is 3 (= 5 - 2) hours for A-100, 0 (= 5 - 3 - 2) hours for B-200, and 2 (= 5 - 3) hours for C-300, 5 hours in total. Time zones permitted to transmit contents are 5:00 to 7:00 and 19:00 to 24:00, 7 hours in total, so that remaining contents can be placed without overlap.
(6) The adjusting part 1503 places not-yet-placed data contents in the time zones indicated by (*) in which no data contents were placed in (5) (S5510). For example, data contents of contents classification numbers 71 to 74 for C-100 are placed in 19:00 to 21:00, and in 21:00 to 24:00, contents of contents classification numbers 41 to 46 for B-200 are placed. Part of the data contents may be placed in a time zone of 5:00 to 7:00.
This processing is the same as (6) (S5309) in the third embodiment.

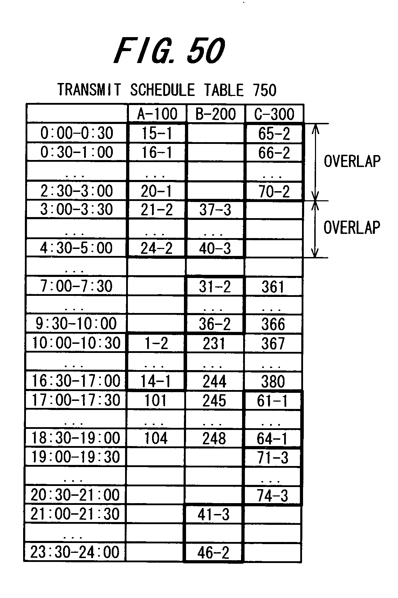

FIG. 50 is an example of the transmit schedule table 750 organized by the adjusting part 1503 in (5). In the case where data contents for particular broadcasting stations are to be overlapped in a particular time zone, no special limitation is placed upon a method of placing the data contents if the attribute information of the data contents for the both broadcasting stations and channels in the overlapping time zone is different. In FIG. 50, although, in 0:00 to 3:00 and 3:00 to 5:00, contents are transmitted in identical time zones from different broadcasting stations and channels, the respective attribute information is always different.

As in other embodiments, the adjusting part 1503 creates receive control information from the transmit desire information 350 and program transmit information from the transmit schedule table 750. The program transmit information created in this embodiment has only attribute information added to contents of the program transmit information in the first and second embodiments, and is created in the same way as in other embodiments of the present invention.

The configuration and processing of the information transmitting apparatus in this embodiment are the same as those in other embodiments of the present invention, and program information 850 created by this information transmitting apparatus has only attribute information added to contents of the program transmit information in the first and second embodiments.

### (Description of the program information 3500)

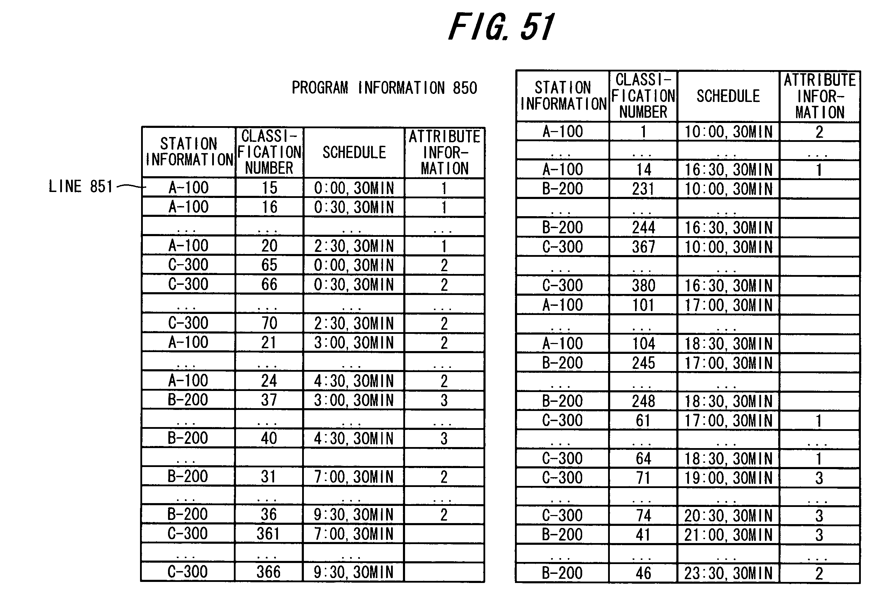

FIG. 51 is a schematic diagram showing an example of the program information 850. In FIG. 51, line 851 indicates that data contents of contents classification number 15 and attribute information 1 are transmitted for 30 minutes from 0:00 in broadcasting station A.

### (Description of the receiving machine 850)

FIG. 51 is a block diagram showing a configuration of the receiving machine 3500 of the fifth embodiment. The receiving machine 3500 is the same as that in other embodiments of the present invention, except a reserving part 3506 and an attribute information management part 3509. Portions unique to this embodiment are described. The attribute information management part 3509 holds attribute information of the receiving machine. The attribute information may be incorporated in the receiving machine in advance or be inputted by users or received from the reproducing part. In this example, the attribute information management part 3509 holds "1" as attribute information. Attribute information is not limited to numbers and may be a bit pattern or character string. The number of pieces of attribute information is not limited to one but may be plural.

### (Description of the reserving part)

The reserving part 3506 gets receive control information from the receive control information management part 3002 and program information from the program information management part 3005, retrieves station information and contents classification number contained in the receive control information from the program information, and registers station information and transmit schedule of contents to be stored in a reservation table 950.

### (Detailed description of the reservation table 950)

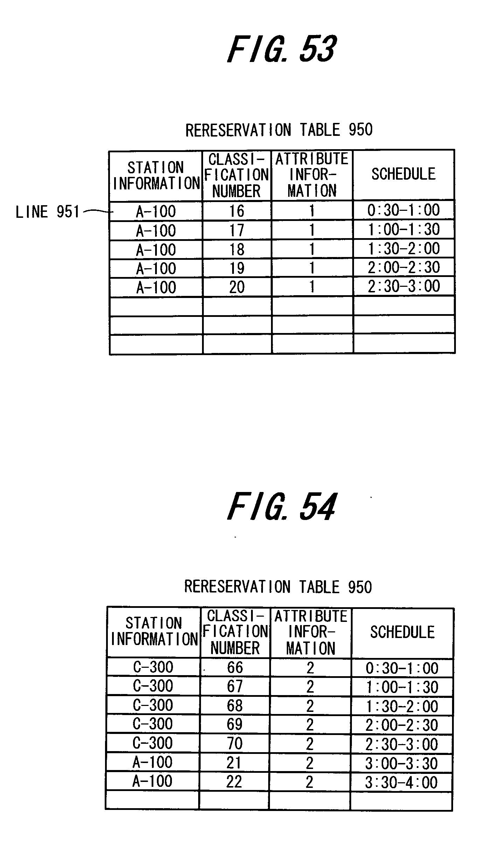

FIG. 53 is a schematic diagram showing an example of the reservation table 950 created by the reserving part 3506. The reservation table 950 consists of sets of station information, contents classification number, reserved schedule, and attribute information. Line 951 of this example denotes that channel 100 of broadcasting station A is selected from 0:30 to 1:00 to receive and store contents of contents classification number 16 and attribute information 1.

### (Description of creation of the reservation table 950 by the reserving part 3506)

The reserving part 3506 gets receive control information from the receive control information management part 3002. The reserving part 3506 gets contents classification numbers, station information, and attribute information from program information held by the program information management part 3005, and checks for the existence of contents classification numbers and station information the same as those in the receive control information. If they exist in the receive control information, the reserving part 3506 checks whether the got attribute information and the attribute information held by the attribute information management part 3509 match each other. Only when they match each other, the reserving part 3506 writes the station information, contents classification number, schedule, and attribute information to the reservation table 950 if they have not been written to it. If the reservation table has no sufficient space to contain more information, the contents classification numbers, station information, schedules, and attribute information of contents that are scheduled later than the contents of the current contents classification number are deleted to write the current contents classification number, station information, schedule, and attribute information. In this way, all program information is read to create the reservation table 950.

In the case of program information of FIG. 51, in 0:30 to 1:00, contents of channel 100 of broadcasting station A with contents classification number 16 and attribute information 1, and contents of channel 200 of broadcasting station C with contents classification number 66 and attribute information 2 overlap each other in terms of time. In this case, since the former has the attribute information (value 1) matching that held by the attribute information management part 3509, the reserving part 3506 registers the contents in the reservation table 950. The latter is not registered because the attribute information does not match. The same is also true for 1:00 to 1:30. In 3:00 to 5:00, no reservation is made because contents having attribute information of 1 do not exist in the program information. In the case where attribute information held by the attribute information management part 3509 is 2, in contrast to the above, contents for C-300 of contents classification numbers 66 to 70 and contents for A-100 of contents classification numbers 21 and 22 are reserved. FIG. 54 shows an example of the reservation table at this time. Accordingly, the receiving machine can select one of contents required from plural contents overlapping in terms of time and reserve, receive, and store them. In this example, as in the third and fourth embodiments, contents, channels, or broadcasting stations may be provided with priorities, and contents may be provided with versions, in which case processing is performed as in the third and fourth embodiments.

### (Sixth embodiment)

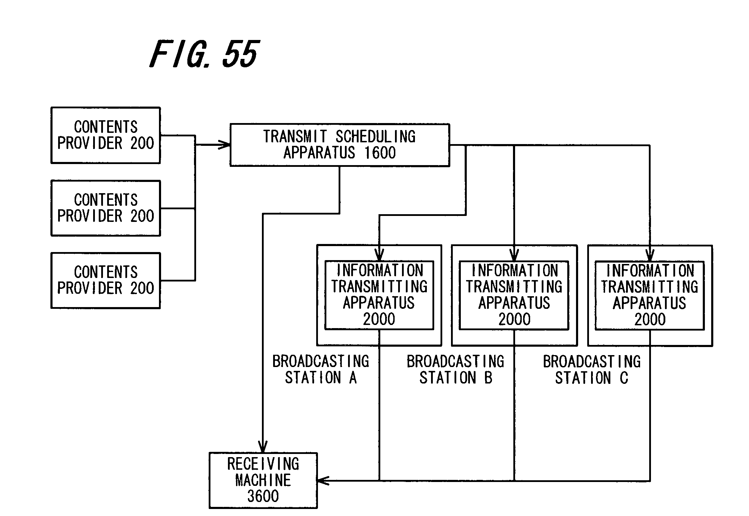

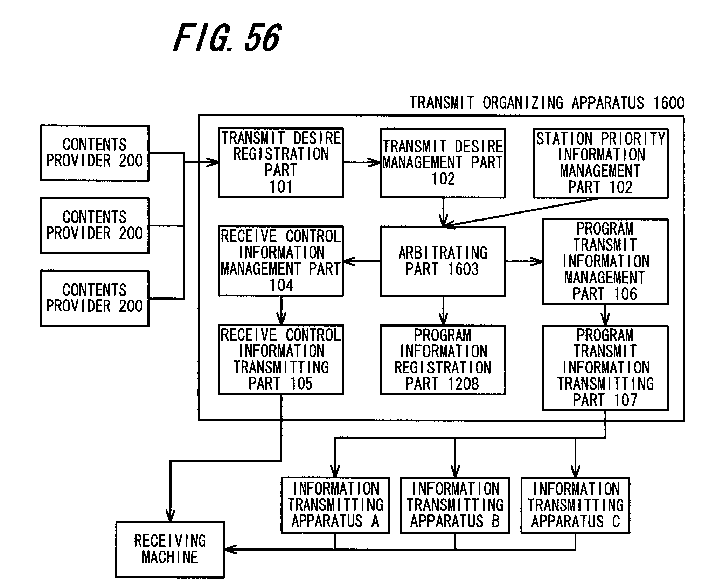

A sixth embodiment of the present invention will be described with reference to the accompanying drawings. An overall configuration of a system in the sixth embodiment is shown in FIG. 55 and the system comprises a transmit scheduling apparatus 1600, information transmitting apparatuses 2000, and a receiving machine 3600. FIG. 56 is a block diagram showing a configuration of the transmit scheduling apparatus 1600 of the sixth embodiment in the present invention. The transmit scheduling apparatus 1300 comprises: a transmit desire registration part 101; a transmit desire management part 102; an adjusting part 1603; a receive control information management part 104; a receive control information transmitting part 105; a program transmit information management part 106; a program transmit information transmitting part 107; a program information registration part 1208; and a station priority information management part 1609.

### (Detailed description of the transmit scheduling apparatus 1600)

The transmit desire registration part 101, the transmit desire management part 102, the receive control information management part 104, the receive control information transmitting part 105, the program transmit information management part 106, and the program transmit information transmitting part 107 are the same as those in the first embodiment, and the program information registration part 1208 is the same as that in the second embodiment. Hereinafter, portions unique to this embodiment will be described.

### (Description of the station priority information management part 1609)

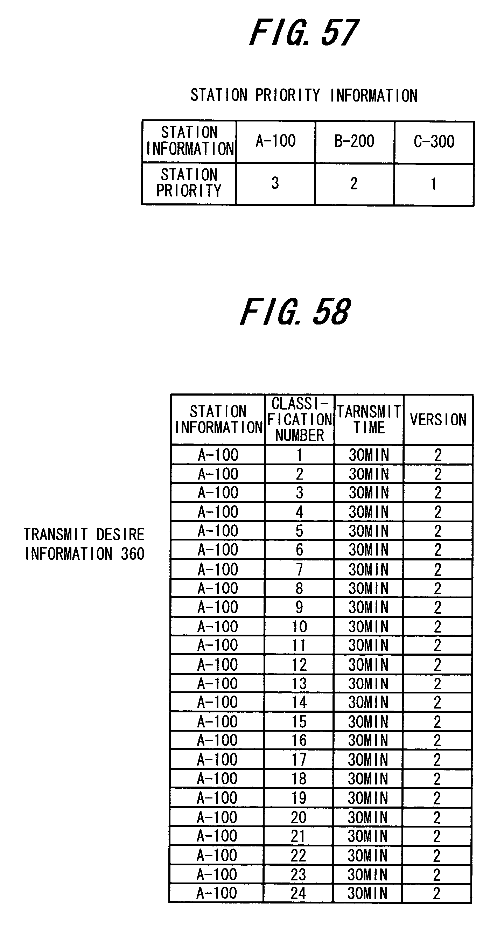

The station priority information management part 1609 holds station priority information 1650. FIG. 57 is an example of the station priority information 1650. The station priority information 1650 is information for helping the receiving machine 3600 to judge which broadcasting station and channel are to be preferentially selected to receive and store data contents for store and forward broadcasting transmitted in identical time zones from plural broadcasting stations and channels. The station priority information 1650 contains station priorities for broadcasting stations and channels indicated by station information. In this example, a greater value of station priority indicates a higher priority. The station priorities of broadcasting stations and channels in the station priority information 1650 are determined in advance. In this example, priority is higher in the order of A-100, B-200, and C-300.

Station priority may be determined by the adjusting part 1603 or contained in transmit desire information 360 in order that the transmit desire registration part 101 or the adjusting part 1603 reads values thereof and records them in the station priority information 1650. The transmit desire registration part 101 registers transmit desire information 360 for indicating contents providers' desire to transmit contents for store and forward broadcasting.

### (Detailed description of transmit desire information 360)

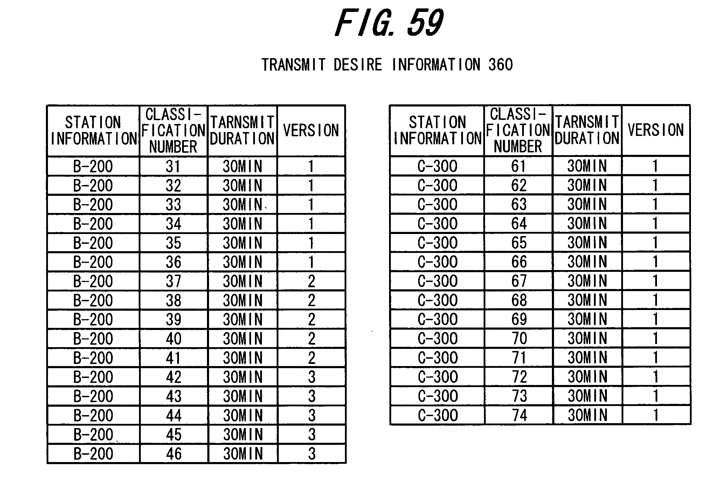

FIGS. 58 and 59 are schematic diagrams showing an example of the transmit desire information 360. The transmit desire information 360, which has items of contents classification number, station information, transmit time, and version, provides desired information to the transmit scheduling apparatus 1600 with respect to each item of data contents provided by the contents providers 200. Contents classification number, station information, and transmit time are the same as those in the first embodiment.

Version is the version of each contents and is added when information of the contents is updated. The receiving machine 3600 does not need to receive and store contents having a contents classification number and version the same as the contents classification number and version of contents already stored.

Hereinafter, a description will be made of how the adjusting part 1603 decides transmit schedules for the transmit desire information 360. In this example, the exclusionary program information 4000 is the same as that in the second embodiment.

### (Description of transmit schedule decision processing by the adjusting part 1603)

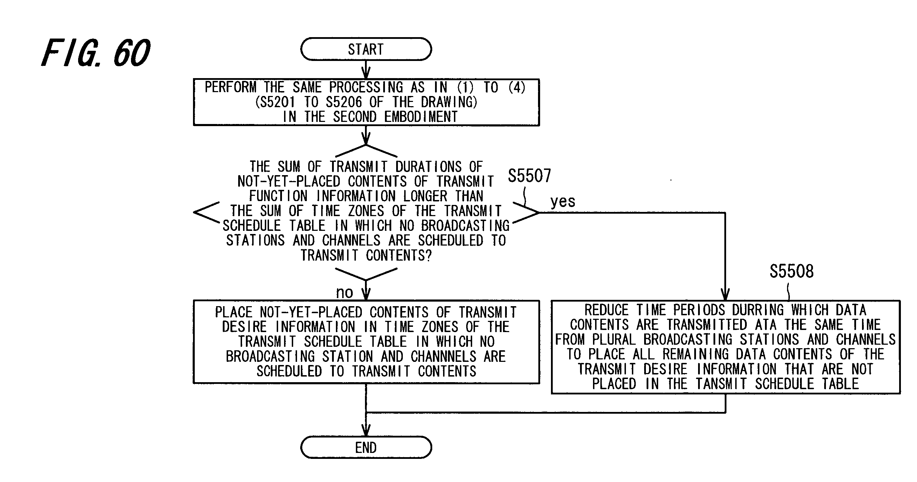

Transmit schedule decision processing by the adjusting part 1603 will be described using a flowchart of FIG. 60. In the sixth embodiment, the adjusting part 1603 creates a transmit schedule table 760 in a way described below from the transmit desire information 360 and the exclusionary program information 4000. The transmit schedule table 760 has a version item (as in the third embodiment) added to contents of the transmit schedule table of the first and second embodiments. In this example, it is understood from the transmit desire information 360 that the sum of transmit times of contents desired to transmit for A-100, B-200, and C-300 is 12, 8, and 7 hours, respectively.

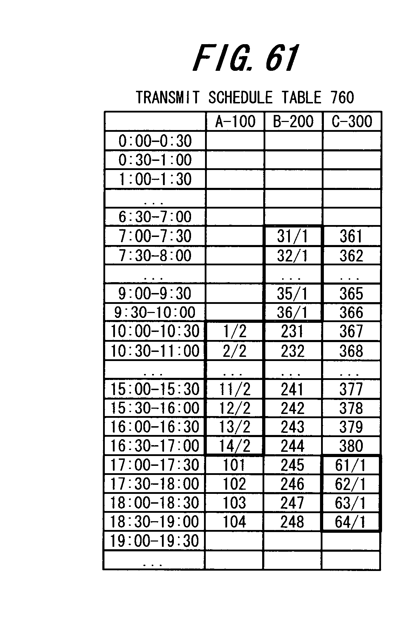

The adjusting part 1603 performs the same processing as in (1), (2), (3), and (4) (S5201 to S5206 in FIG. 15) of the second embodiment. FIG. 61 is the transmit schedule table 760 after the adjusting part 1603 performs processing of (1) to (4). In FIG. 61, "A/B" indicates data contents with contents classification number A and version B.
(5) The adjusting part 1603 places contents classification numbers of data contents of the transmit desire information 360 that are not yet placed in the transmit schedule table 760 at the point of (4), in time zones (time zones except (2), (3), and (4)) of the transmit schedule table 760 in which no broadcasting stations are scheduled to transmit contents. To do this, the sum of time zones of the transmit schedule table 760 in which no broadcasting stations are scheduled to transmit contents is compared with the sum of transmit times of data contents not yet placed in the transmit schedule table (S5607). If the former is longer, scheduling is terminated after performing processing (6) (S5609) described later.

In this case, time zones of the former are 0:00 to 7:00 and 19:00 to 24:00(*), 12 hours in total, while the sum of transmit times of data contents of the transmit desire information 360 that are not yet placed in the transmit schedule table is 15 hours, with 5 hours for A-100, 5 hours for B-200, and 5 hours for C-300. Accordingly, it is impossible to assign all these remaining data contents to the broadcasting stations without overlapping in terms of time.

In this case, the adjusting part 1603 reduces time periods during which data contents are transmitted from plural broadcasting stations and channels at the same time in the above described idle times(*) to place all remaining data contents of the transmit desire information 360 that are not placed in the transmit schedule table (S5608). Hereinafter, this processing will be described in detail.

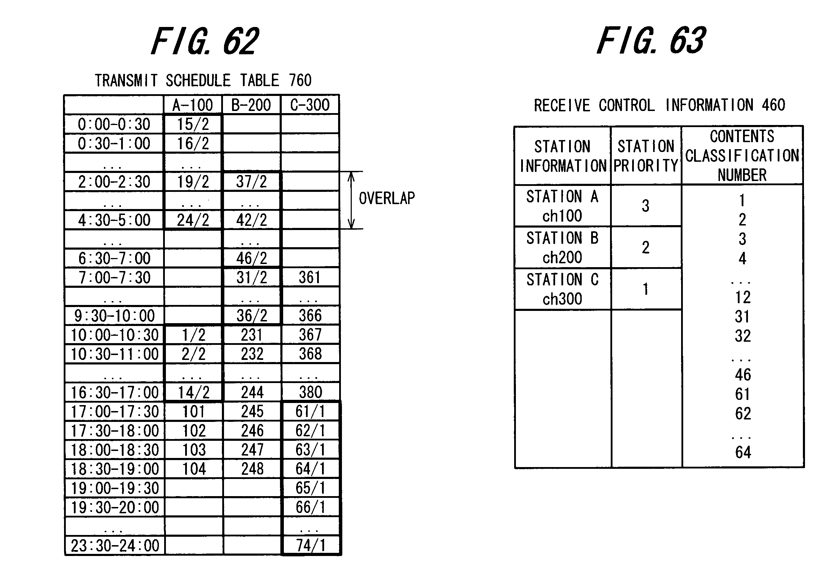

The adjusting part 1603 places data contents for A-100 in any of the above described idle times(*). For example, data contents (contents classification numbers 15 to 24) for A-100 are placed continuously in a time zone of 0:00 to 5:00 of the transmit schedule table 760. Data contents (contents classification numbers 65 to 74) for C-300 are placed in 19:00 to 24:00. As a result, in the transmit schedule table 760, the sum of time zones in which no broadcasting stations are scheduled to transmit contents is 2 hours (= 12 - 5 - 5), while the sum of transmit times of data contents not yet placed in the transmit schedule table is 5 hours. Accordingly, two hours of data contents for B-200 not yet placed are placed in a time zone (5:00 to 7:00) in which no broadcasting stations are scheduled to transmit contents, and the remaining three hours are placed in time zones the same as those of contents for A-100 or C-300. In this example, data contents (contents classification numbers 7 to 16) for B-200 are placed in 2:00 to 5:00. FIG. 62 shows the transmit schedule table 760 at this time. As a result, in 2:00 to 5:00, contents for A-100 and contents for B-200 will be transmitted with overlap in terms of time.

In the case where data contents for particular broadcasting stations and channels are to be overlapped in a particular time zone, no special limitation is placed upon a method of placing the data contents if the attribute information of the data contents for the both broadcasting stations and channels in the overlapping time zone is different.
(6) The adjusting part 1603 places not-yet-placed data contents in the time zones indicated by (*) so that data contents transmission from plural broadcasting stations and channels in identical time zones does not overlap (S5609).

The adjusting part 1603 creates receive control information 460 from the transmit desire information 360 and the station priority information 1650.

### (Description of the receive control information 460)

FIG. 63 is a schematic diagram showing an example of the receive control information 460 in the sixth embodiment. Station information provided with station priority is added to the receive control information in other embodiments of the present invention.

### (Description of creation of the receive control information 460 by the adjusting part 1603)

The adjusting part 1603 gets contents classification number and station information from each line of the transmit desire information 360. The adjusting part 1603, if the station information does not exist in the receive control information 460, newly adds it. At this time, the adjusting part 1603 get station priority corresponding to the station information from a station priority information management part 1609 and writes it to the relevant station information of the receive control information 460. The adjusting part 1603 writes the got contents classification number to the receive control information 460. The adjusting part gets all the transmit desire information 360 to create the receive control information 460. The receive control information 460 may be created in parallel with the creation of the transmit schedule table 760, and program transmit information.

The adjusting part 1603 creates program transmit information from the transmit schedule table 760 as in other embodiments. The program transmit information has only versions added as in the third to contents of the program transmit information in the first and second embodiments and is created in the same way as in other embodiments of the present invention. An information transmitting apparatus in the sixth embodiment is similar to that in other embodiments, except that versions are added to contents contained in program transmit information and program information 860; processing in the parts is the same as that in other embodiments.

### (Description of the program information 860)

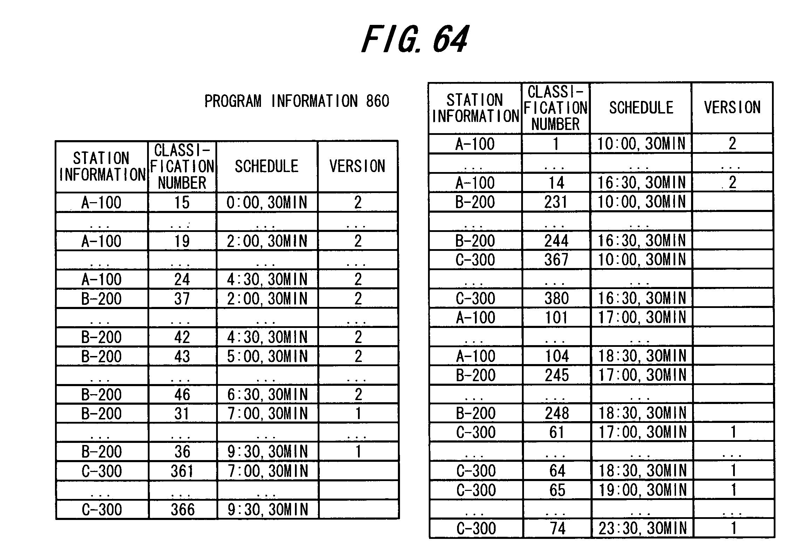

FIG. 64 is a schematic diagram showing an example of the program information 860. The program information 860 consists of a combination of the exclusionary program information 4000 and program information created from program transmit information and is sorted in ascending order by time. The program information 860 is the same as that in other embodiments, except that only versions are added to contents.

### (Description of the receiving machine 3600)

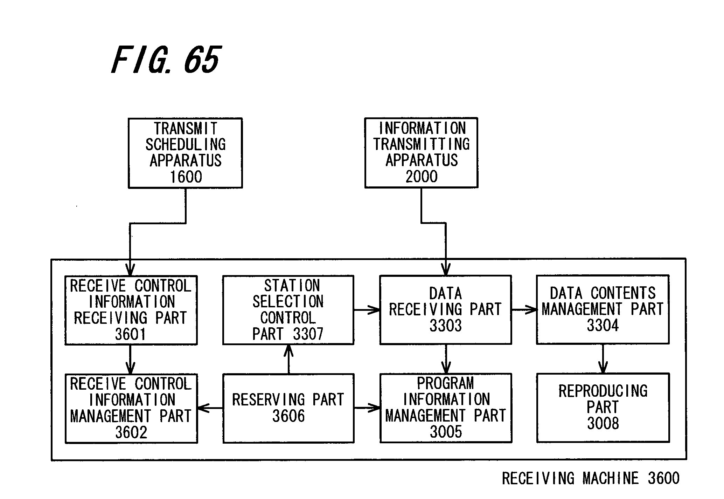

FIG. 65 is a block diagram showing a configuration of the receiving machine 3600 of the sixth embodiment. The receiving machine 3600 comprises: a receive control information receiving part 3601; a receive control information management part 3602; a data receiving part 3303; a data contents management part 3304 that holds received data contents; a program information management part 3005; a reserving part 3606 that reserves contents to be received; a station tuning control part 3307 that tunes a tuner to a channel of a broadcasting station to receive from, according to a request from the reserving part 3606; and a reproducing part 3008 that reproduces received data contents. In the receiving machine 3600, the program information management part 3005 and the reproducing part 3008 are the same as those in the first embodiment, and the data receiving part 3303, the data contents management part 3304, and the station tuning control part 3307 are the same as those in the third embodiment. The data contents management part 3304 holds a storage contents list 3350 in addition to stored data contents, as in the third embodiment. The storage contents list 3350 is the same as that in the third embodiment. The receive control information receiving part 3601 receives the receive control information 460 transmitted from the transmit scheduling apparatus 1600. The receive control information management part 3602 manages the receive control information 460 received by the receive control information receiving part 3601.

### (Description of processing of the reserving part)

The reserving part 3606 gets receive control information 460 from the receive control information management part 3602 and program information from the program information management part 3005, retrieves station information and contents classification numbers contained in the receive control information 460 from the program information, and registers station information and transmit schedules of contents to be stored in the reservation table 960.

### (Detailed description of the reservation table 960)

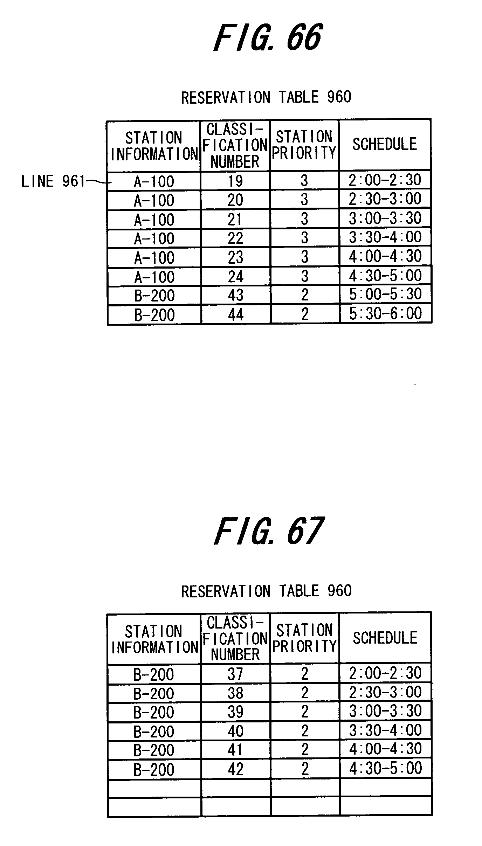

FIG. 66 is a schematic diagram showing an example of the reservation table 960 created by the reserving part 3306. The reservation table 930 consists of sets of station information, contents classification numbers, reserved schedules, and station priorities. Station priority indicates priority at which the receiving machine 3600 selects a broadcasting station and channel described in station information of the receive control information 460 and reserves reception and storage. Line 961 of this example indicates that channel 100 of broadcasting station a is selected for 30 minutes from 2:00 to receive and store contents of contents classification number 19 and station priority 3.

### (Description of creation of the reservation table 960 by the reserving part 3606)

The reserving part 3606 gets receive control information from the receive control information management part 3602. The reserving part 3306 gets contents classification numbers and station information from program information 860 held by the program information management part 3005, and checks for the existence of contents classification numbers and station information the same as those in the receive control information 460. If they exist in the receive control information 460, the reserving part 3606 gets the versions of contents of the contents classification numbers from the storage contents list 3350 held by the data contents management part 3304 and compares them with the versions got from the program information. If the versions got from the program information 860 are greater in value, the contents are eligible for being newly reserved.

The reserving part 3606 checks whether the contents schedules overlapping in terms of time with those of the contents eligible for being newly reserved have been reserved in the reservation table 960. If not reserved, the contents classification numbers, station information, and schedules of the contents are written to the reservation table 960, and station priority corresponding to the station information is got from the receive control information management part 3602 and written to the reservation table 960. If the contents schedules overlapping in terms of time have been already reserved, the station priorities of contents already described are got from the reservation table 960, the station priorities of broadcasting stations and channels from which the contents eligible for being newly reserved are transmitted are got from the receive control information management part 3602, and both are compared. If the contents eligible for being newly reserved are higher in station priority, information of the existing contents overlapping in terms of time is deleted from the reservation table 960 and the contents classification numbers, station information, schedules, priorities, and versions of the contents eligible for being newly reserved are written. If the reservation table 960 has no sufficient space to contain more information, the contents classification numbers, station information, schedules, station priorities, and versions of contents that are scheduled later than the contents eligible for being newly reserved are deleted to write the contents classification numbers, station information, schedules, station priorities, and versions of the contents eligible for being newly reserved. In this way, all program information is read to create the reservation table 960.

In the case of program information 860 of FIG. 64, in 2:00 to 2:30, contents of channel 100 of broadcasting station A with contents classification number 19 and version 2, and contents of channel 200 of broadcasting station B with contents classification number 37 and version 2 overlap each other in terms of time. In this case, the reserving part 3606 gets the station priorities of broadcasting stations and channels from which both contents are transmitted, from the receive control information management part 3602. Since the former (A-100) is higher in station priority, the former is registered in the reservation table 960. The reservation table 960 created in this way is as shown in FIG. 66. Thereafter, when contents of channel 100 of broadcasting station A with contents classification number 19 have been stored as reserved, the version of the contents of the storage contents list becomes 2. For example, in the case where the reservation table 960 is created using the same program information on the next day, schedule overlap also occurs in 2:00 to 2:30, and contents of channel 100 of broadcasting station A with contents classification number 19 are higher in station priority, but the version of the contents of the storage contents list became 2 in the previous storage, which is the same as the version of the contents in the program information, indicating that the contents do not need to be stored. Therefore, this time, the reserving part 3606 registers the contents of channel 200 of broadcasting station B with contents classification number 37 in the reservation table 960. The reservation table 960 created in this way is as shown in FIG. 67. Hence, plural contents overlapping in terms of time can be stored. The reserving part 3606 may create the reservation table 960 at the time of reception of program information or at a predetermined time interval. The reserving part 3606 outputs the created reservation table 960 to the station tuning control part 3307. Processing of the station tuning control part 3307 and the data receiving part 3303 is the same as in the third embodiment.

In this way, even if the transmit scheduling apparatus 1600 makes schedules to transmit store and forward broadcast service contents in identical time zones from plural broadcasting stations and channels, the receiving machine 3600 interprets the station priorities and versions of broadcasting stations and channels from which the contents are transmitted, and selects contents to be reserved and stored, and thereby can receive and store both contents. Although, in this embodiment, only station priority is used, priority may be assigned to each contents of transmit desire information.

Although the present invention has been described based on preferred embodiments shown in the drawings, it is apparent that various modifications and revisions can be made by those skilled in the art without departing from the sprit and scope of the present invention. The present invention includes such modifications as well.

## Claims

1. A data broadcasting schedule system that transmits and receives data over a transmission line, wherein a data transmitting part transmitting data to a receiving machine transmitting and receiving data comprises:
a transmit desire registration part that accepts registration of transmit desire information describing times required to transmit data to be transmitted for each broadcasting station and registers the transmit desire information;
a transmit desire management part that manages said transmit desire information registered in said transmit desire registration part; and
an adjusting part that arbitrates transmit time of data to be transmitted from said each broadcasting station without overlap by using each said transmit desire information managed by said transmit desire management part.

2. A data broadcasting schedule method that transmits and receives data over a transmission line, wherein a data transmitting part transmitting data to a receiving machine transmitting and receiving data comprises:
a transmit desire registration part that accepts registration of transmit desire information describing times required to transmit data to be transmitted for each broadcasting station and registers the transmit desire information;
a transmit desire management part that manages said transmit desire information registered in said transmit desire registration part; and
an adjusting part that arbitrates transmit time of data to be transmitted from said each broadcasting station without overlap by using each said transmit desire information managed by said transmit desire management part, whereby data is transmitted according to transmit schedules arbitrated and created by said adjusting part.

3. A recording medium recording a data broadcasting schedule program that transmits and receives data over a transmission line, wherein a data transmitting part transmitting data to a receiving machine transmitting and receiving data comprises:
a transmit desire registration part that accepts registration of transmit desire information describing times required to transmit data to be transmitted for each broadcasting station and registers the transmit desire information;
a transmit desire management part that manages said transmit desire information registered in said transmit desire registration part; and
an adjusting part that arbitrates transmit time of data to be transmitted from said each broadcasting station without overlap by using each said transmit desire information managed by said transmit desire management part, whereby data is transmitted according to transmit schedules arbitrated and created by said adjusting part.

4. A data broadcasting schedule program that transmits and receives data over a transmission line, wherein a data transmitting part transmitting data to a receiving machine transmitting and receiving data comprises:
a transmit desire registration part that accepts registration of transmit desire information describing times required to transmit data to be transmitted for each broadcasting station and registers the transmit desire information;
a transmit desire management part that manages said transmit desire information registered in said transmit desire registration part; and
an adjusting part that arbitrates transmit time of data to be transmitted from said each broadcasting station without overlap by using each said transmit desire information managed by said transmit desire management part, whereby data is transmitted according to transmit schedules arbitrated and created by said adjusting part.

5. A transmit scheduling apparatus, comprising:
a transmit desire registration part that registers transmit desire information which contains station information and the identification numbers of data contents to be transmitted and transmit times of said data contents wherein the station information is data for at least one contents provider to request transmission of data contents and identifies at least a broadcasting station and channel to transmit from;
a transmit desire management part that holds said transmit desire information; and
an adjusting part that arbitrates and decides broadcasting stations and channels to actually transmit data contents and transmit schedules from said transmit desire information, and creates program transmit information describing transmit schedules of said data contents,
whereby scheduling is performed among at least one broadcasting station to transmit data contents without overlapping in terms of time.

6. The transmit scheduling apparatus according to claim 5, comprising:
the transmit desire registration part that registers transmit desire information which contains station information and the identification numbers of data contents to be transmitted and transmit times of said data contents wherein the station information is data for at least one contents provider to request transmission of data contents and identifies at least a broadcasting station and channel to transmit from;
the transmit desire management part that holds said transmit desire information;
an adjusting part that arbitrates and decides broadcasting stations and channels to actually transmit data contents and transmit schedules from said transmit desire information, and creates receive control information for identifying data contents to be received and stored by a receiving machine and for tuning a tuner required to receive said data contents and program transmit information describing transmit schedules of said data contents;
a receive control information management part that manages said receive control information;
a program transmit information management part that manages said program transmit information;
a receive control information transmitting part that transmits said receive control information to the receiving machine; and
a program transmit information transmitting part that transmits said program transmit information to an information transmitting apparatus,
whereby scheduling is performed among at least one broadcasting station to transmit data contents without overlapping in terms of time.

7. An information transmitting apparatus, comprising:
a program transmit information receiving part that receives program transmit information describing transmit schedules of data contents;
a program transmit information management part that holds said program transmit information received by said program transmit information receiving part; and
a program information creating part that creates program information to be received by a receiving machine from said program transmit information held by said program transmit information management part,
whereby, according to transmit schedules of said program information, data contents are transmitted from broadcasting stations and channels described in said program information.

8. The information transmitting apparatus according to claim 7, comprising:
the program transmit information receiving part that receives program transmit information describing transmit schedules of data contents;
the program transmit information management part that holds said program transmit information received by said program transmit information receiving part;
the program information creating part that creates program information to be received by a receiving machine from said program transmit information held by said program transmit information management part;
a program information management part that manages said program information created by said program information creating part;
a contents management part that manages data contents; and
a transmitting part that transmits said program information and said data contents managed by said contents management part to the receiving machine,
whereby, according to transmit schedules of said program information, data contents are transmitted from broadcasting stations and channels described in said program information.

9. A receiving machine receiving and storing program information and data contents, comprising:
a receive control information receiving part that receives receive control information for identifying data contents to be received and stored and for tuning a tuner required to receive said data contents;
a receive control information management part that holds said receive control information received by said receive control information receiving part;
a reserving part that reserves data contents to be received and stored from said receive control information and said program information;
a station tuning control part that tunes a tuner according to reservation contents of said reserving part; and
a data receiving part that receives said program information and data contents according to station tuning by said station tuning control part.

10. The transmit scheduling apparatus according to claim 5, wherein, from station information described in said transmit desire information and transmit times of data contents transmitted from broadcasting stations and channels described in said station information, said adjusting part creates transmit time frames to transmit at least one data contents at a time without overlapping in terms of time for each of said broadcasting stations and channels, and decides data contents transmit schedules for each of said broadcasting stations and channels within a range of said transmit time frames, whereby scheduling is performed among at least one broadcasting station to transmit data contents without overlapping in terms of time.

11. The transmit scheduling apparatus according to claim 5, wherein, from station information described in said transmit desire information and transmit times of data contents transmitted from broadcasting stations and channels described in said station information, said adjusting part creates transmit time frames not overlapping in terms of time for each of said broadcasting stations and channels, and outputs at least said transmit time frames, contents classification numbers for identifying data contents to be transmitted from said broadcasting stations and channels, and transmit times to said broadcasting stations and channels.

12. The information transmitting apparatus according to claim 7, wherein said program transmit information receiving part receives said transmit time frames, and contents classification numbers and transmit times of data contents, and the program information creating part decides transmit schedules of said data contents within a range of said transmit time frames to create said program information.

13. The transmit scheduling apparatus according to claim 5, wherein said transmit desire information contains priorities, and said adjusting part, when adjusting schedules with the broadcasting stations to actually transmit data contents based on said transmit desire information, decides schedules of said data contents so that said data contents of identical priority do not overlap in an occasion that said data contents overlap in terms of time.

14. The receiving machine according to claim 9, wherein, when transmit schedules of data contents judged to be received and stored from said receive control information and said program information overlap each other, said reserving part preferentially reserves data contents of higher priority.

15. The transmit scheduling apparatus according to claim 6, wherein said adjusting part affords priorities to station information described in said transmit desire information and creates said receive control information containing the priorities.

16. The receiving machine according to claim 9, wherein said receive control information contains priorities, and when transmit schedules of data contents judged to be received and stored from said receive control information and said program information overlap each other, said reserving part preferentially reserves data contents transmitted from broadcasting stations or channels having higher priority in said receive control information.

17. The receiving machine according to claim 9, wherein said program information contains versions or update dates of data contents, said data contents management part holds said versions or said update dates of received and stored data contents, and said reserving part refers to said version or said update date of data contents judged to be received and stored from said receive control information and said program information to avoid reservation of said data contents if already received and stored.

18. The receiving machine according to claim 16, wherein said program information contains versions or update dates of data contents, said data contents management part holds said versions or said update dates of received and stored data contents, and if transmit schedules of data contents judged to be received and stored from said receive control information and said program information overlap each other, said reserving part refers to said version or said update date of data contents of higher priority, and if the data contents are already received and stored, avoids reservation of the data contents to reserve data contents of lower priority.

19. The receiving machine according to claim 17, wherein said program information contains versions or update dates of data contents, said data contents management part holds said versions or said update dates of received and stored data contents, and if transmit schedules of data contents judged to be received and stored from said receive control information and said program information overlap each other, said reserving part refers to said version or said update date of data contents of higher priority, and if the data contents are already received and stored, avoids reservation of the data contents to reserve data contents of lower priority.

20. The transmit scheduling apparatus according to claim 5, wherein said transmit desire information contains transmit desire time frames in which transmission of at least one data contents is desired, and said adjusting part decides transmit schedules of data contents for which said transmit time frames are not specified, to avoid overlap with said transmit time frames.

21. The transmit scheduling apparatus according to claim 5, wherein said transmit desire information contains transmit desire times at which transmission of data contents is desired, and said adjusting part decides transmit schedules of data contents not having said transmit desire times so as not to overlap with said transmit desire times.

22. The transmit scheduling apparatus according to claim 21, wherein, when said transmit desire times of plural data contents overlap in said transmit desire information and priorities thereof are identical, said adjusting part periodically changes the priority of one or both of them to make the priorities of said data contents different from each other.

23. The transmit scheduling apparatus according to claim 21, wherein, when said transmit desire times of plural data contents overlap in said transmit desire information and priorities thereof are identical, said adjusting part periodically changes the priority of one or both of them so that both of overlapping data contents always periodically become higher in priority than the other.

24. The transmit scheduling apparatus according to claim 5, wherein said transmit desire information contains attribute information, and when deciding schedules of data contents according to said transmit desire information, said adjusting part overlaps transmit schedules for data contents that are different from each other in said attribute information and said transmit desire broadcasting stations.

25. The receiving machine according to claim 9, including a receiving machine attribute information management part that holds receiving machine attribute information indicating receiving machine attributes and user's preference attribute, wherein said reserving part reserves only data contents that are equal in said receiving machine attribute information and said receive control information or attribute information of said program information.

26. The transmit scheduling apparatus according to claim 5, wherein said adjusting part provides a fixed idle time so that both ends of transmit schedules of data contents to be transmitted from different broadcasting stations are not continuous.

27. The transmit scheduling apparatus according to claim 10, wherein said adjusting part provides a fixed idle time so that both ends of said transmit time frames for individual broadcasting stations are not continuous.

28. The receiving machine according to claim 24, including a receiving machine attribute information management part that holds receiving machine attribute information indicating receiving machine attributes and user's preference attribute, wherein said reserving part reserves only data contents that are equal in said receiving machine attribute information and said receive control information or attribute information of said program information.
